(19) **Europäisches Patentamt / European Patent Office / Office européen des brevets**

(11) **EP 4 484 044 B1**

(12) **EUROPEAN PATENT SPECIFICATION**

(45) Date of publication and mention of the grant of the patent:
**25.03.2026 Bulletin 2026/13**

(21) Application number: **23815468.6**

(22) Date of filing: **27.01.2023**

(51) International Patent Classification (IPC):
**B23K 11/16** (2006.01)    **B23K 11/11** (2006.01)
**B23K 11/24** (2006.01)    **B23K 101/00** (2006.01)
**B23K 101/18** (2006.01)    **B23K 101/34** (2006.01)
**B23K 103/04** (2006.01)

(52) Cooperative Patent Classification (CPC):
**B23K 11/11; B23K 11/115; B23K 11/16;**
**B23K 11/166; B23K 11/24;** B23K 2101/006;
B23K 2101/18; B23K 2101/34; B23K 2103/04

(86) International application number:
**PCT/JP2023/002726**

(87) International publication number:
**WO 2023/233704 (07.12.2023 Gazette 2023/49)**

(54) **WELDED JOINT, WELDED MEMBER, METHOD OF PRODUCING SAME, AND RESISTANCE SPOT WELDING METHOD**

SCHWEISSVERBINDUNG, SCHWEISSELEMENT, VERFAHREN ZUR HERSTELLUNG DAVON UND WIDERSTANDSPUNKTSCHWEISSVERFAHREN

JOINT SOUDÉ, ELEMENT SOUDÉ, PROCEDE DE FABRICATION DE CELUI-CI, ET PROCEDE DE SOUDAGE PAR POINTS PAR RESISTANCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.06.2022 JP 2022091183**

(43) Date of publication of application:
**01.01.2025 Bulletin 2025/01**

(73) Proprietor: **JFE Steel Corporation Tokyo 100-0011 (JP)**

(72) Inventors:
- **YAMAGISHI, Daiki**
  **Tokyo 100-0011 (JP)**
- **SAWANISHI, Chikaumi**
  **Tokyo 100-0011 (JP)**
- **KAWABE, Nao**
  **Tokyo 100-0011 (JP)**
- **TAKASHIMA, Katsutoshi**
  **Tokyo 100-0011 (JP)**
- **TANIGUCHI, Koichi**
  **Tokyo 100-0011 (JP)**
- **MATSUDA, Hiroshi**
  **Tokyo 100-0011 (JP)**

(74) Representative: **Haseltine Lake Kempner LLP Bürkleinstrasse 10 80538 München (DE)**

(56) References cited:
EP-A1- 3 278 917        WO-A1-2014/045431
WO-A1-2019/124464    WO-A1-2019/124464
WO-A1-2020/212741    JP-A- 2003 236 676
JP-A- 2010 247 215      JP-A- 2019 536 631
JP-A- 2020 127 958      JP-A- 2020 127 958
US-A1- 2012 193 331

**Description**

TECHNICAL FIELD

The present invention relates to a welded joint, a welded member, a method of producing same, and a resistance spot welding method.

BACKGROUND

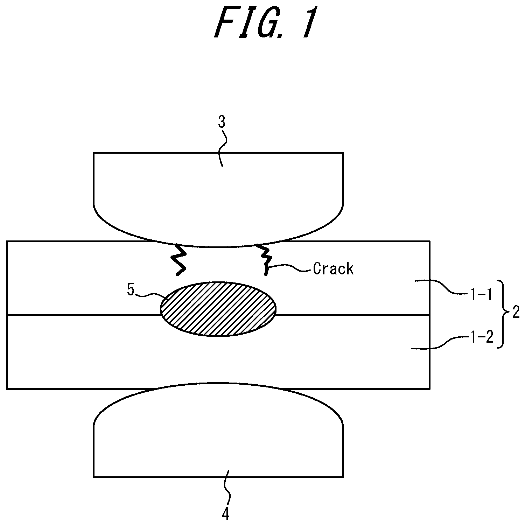

In the assembly of automobiles, resistance spot welding, a type of lap resistance welding, is often used to join overlapping steel sheets from the viewpoint of cost and manufacturing efficiency. As illustrated in FIG. 1, for example, this welding method uses a pair of welding electrodes 3, 4 (hereinafter, the electrode disposed on the vertically upward side is also referred to as the upper electrode 3 and the electrode disposed on the vertically downward side is also referred to as the lower electrode 4) to squeeze a sheet combination 2 of overlapped steel sheets 1-1, 1-2 (hereinafter, the steel sheet disposed uppermost in the vertical direction is also referred to as the upper steel sheet 1-1 and the steel sheet disposed lowermost in the vertical direction is also referred to as the lower steel sheet 1-2). Pressure is applied from the welding electrodes 3, 4 from above and below while a welding current is passed between the welding electrodes 3, 4 to join the sheet combination 2. In this welding method, a point-like welded portion is obtained by using resistance heat generated by the welding current. The welded portion is called a nugget 5. That is, the nugget 5 is the portion that melts and solidifies at the contact point of the overlapped steel sheets when the electric current flows through the steel sheets. The steel sheets are spot-welded by the nugget 5.

In recent years, the automobile field has been promoting weight reduction of automotive bodies to improve fuel efficiency. As a result, the application of high strength steel sheets to automotive parts is increasing. Further, among automotive parts, for parts applied to locations that are exposed to rainwater, coated or plated steel sheets having antirust properties such as galvanized steel sheets (surface-treated steel sheets) are used from the viewpoint of corrosion resistance. Here, a coated or plated steel sheet is a steel sheet having a metal coating or plating layer on a surface of a base metal (base steel sheet). As a metal coating or plating layer, examples include zinc coating or plating as typified by electrogalvanized plating and hot-dip galvanizing (including galvannealing), zinc alloy coating or plating containing elements such as aluminum and magnesium in addition to zinc, and aluminum-zinc alloy coating or plating consisting mainly of aluminum and zinc, and the like.

As resistance spot welding applied to a sheet combination of an overlapped plurality of steel sheets including such a coated or plated steel sheet, an example is described in Patent Literature (PTL) 1:

"in spot welding of high strength coated or plated steel sheets, a high strength coated or plated steel sheet spot welding method in which the weld time and the hold time after welding current are set to satisfy the following conditions (1) and (2) to perform spot welding,

$$0.25 \cdot (10 \cdot t + 2) / 50 \leq WT \leq 0.50 \cdot (10 \cdot t + 2) / 50 \qquad \ldots (1)$$

$$300 - 500 \cdot t + 250 \cdot t^2 \leq HT \qquad \ldots (2)$$

where t is sheet thickness (mm), WT is weld time (ms), and HT is hold time (ms) after welding current."

PTL 2 describes:

"in spot welding of high tensile strength galvanized steel sheets by multi-stage current having three or more stages, a high tensile strength galvanized steel sheet spot welding method in which welding conditions are adjusted so that the nugget formed is greater than or equal to a desired nugget diameter $d_0$ defined by the following expression (1) and a remaining thickness other than the nugget is 0.05 mm or more,

$$d_0 = k \sqrt{t} \qquad \ldots (1)$$

where $d_0$ is the desired nugget diameter (mm),
k is a coefficient; a coefficient selected from 3 to 6 according to work conditions, and
t is steel sheet thickness (mm)."

PTL 3 describes:

"a spot welding method of spot welding a plurality of overlapped steel sheets by squeezing between opposed welding electrodes, the plurality of overlapped steel sheets including one or more steel sheets coated with a coating at the welding point on at least one surface, the method comprising
a process of removing the coating prior to spot welding,
wherein, in the process of removing the coating, a range where the coating is removed is at least an area that has an outer circumference in a circle that includes the outer edge of the heat-affected zone formed on the welding electrode side of the plurality of overlapped steel sheets."

PTL 4 describes:

"a spot welding method of performing an actual welding process in which a member to be welded consisting of a plurality of steel sheets overlapped at least at the welding point is pressed and has a current passed therethrough by welding electrodes, and further, a current process of performing at least one of pre-current and subsequent-current,
wherein, for at least one of the plurality of steel sheets, at least an overlapping surface at the welding point is coated with a galvanized coating, the total thickness t (mm) of the plurality of steel sheets is 1.35 mm or more,
the pressure applied to the member to be welded by the welding electrodes is maintained from the start of current passing between the welding electrodes until the end of current passing between the welding electrodes at the end of welding,
and, at the end of welding, a hold time Ht (s) after the end of current passing between the welding electrodes until the welding electrodes and the member to be welded are no longer in contact is within the range of expression (1) below.

$$0.015t^2 + 0.020 \leq Ht \leq 0.16t^2 - 0.40t + 0.70 \qquad \ldots(1)"$$

PTL 5 describes:

"a resistance spot welding method of squeezing, by a pair of welding electrodes, a sheet combination of a plurality of overlapped steel sheets and passing a current while applying an electrode force to join the sheet combination,
wherein at least one of the plurality of overlapped steel sheets is a surface-treated steel sheet with a metal coating or plating layer on a surface, the resistance spot welding method comprising:

a main current process of passing current to form a nugget;
a no-current process of suspending current after the main current process for a cooling time Tc (cycle); and
a subsequent-current process after the no-current process of passing current that reheats without growing the nugget,
wherein, when the inclined angle of the electrode is A (degrees), the current value of the main current process is Im (kA), the current value of the subsequent-current process is Ip (kA), 1 + 0.1·Tc is a variable B, and 1 + 0.2·Tc is a variable C, the current satisfies the relationships in the following Expression (I),

$$\text{Expression (I)}$$
$$\text{when } 0 < A < 3,\ (22 + A) \cdot B/100 < Ip/Im < C$$
$$\text{when } 3 \leq A < 7,\ (17 + A) \cdot B/80 < Ip/Im < C$$
$$\text{when } 7 \leq A < 15,\ (11 + A) \cdot B/60 < Ip/Im < C"$$

CITATION LIST

Patent Literature

PTL 1: JP 2003-103377 A
PTL 2: JP 2003-236676 A
PTL 3: WO 2016/159169 A1
PTL 4: JP 2017-047476 A

PTL 5: WO 2018/159764 A1

Further, the patent documents JP 2020-127958 A, WO 2019/124464 A1 and EP 3278917 A disclose resistance spot welded joints comprising a sheet combination of n overlapped steel sheets and a nugget joining the steel sheets.

SUMMARY

(Technical Problem)

In resistance spot welding applied to a coated or plated steel sheet, in particular applied to a sheet combination consisting of a plurality of overlapped steel sheets including a galvanized steel sheet (hereinafter also referred to as resistance spot welding of a galvanized steel sheet), there is a problem that cracks easily occur in the welded portion.
Typically, the melting point of zinc or zinc alloy coating or plating is lower than that of base metal. Therefore, in resistance spot welding of a galvanized steel sheet, the metal coating or plating layer with a low melting point on the steel sheet surface melts during welding. When tensile stress due to the electrode pressing force and thermal expansion and contraction of the steel sheet is applied to the welded portion, the molten low-melting-point metal penetrates into crystal grain boundaries of the base metal of the galvanized steel sheet, decreasing grain boundary strength and causing cracking. That is, most cracks in the welded portion that occur in resistance spot welding of a galvanized steel sheet are considered to be cracks caused by liquid metal embrittlement (hereinafter also referred to as liquid metal embrittlement cracks).
Such liquid metal embrittlement cracks are likely to occur when the welded portion is subjected to a large deformation. For example, when welding under conditions that cause expulsion (splashing), cracks are likely to occur on a surface of sheet combination 2 in contact with welding electrodes 3, 4, as illustrated in FIG. 1. In particular, a crack that occurs at a shoulder of a sheet combination surface, which is a periphery of a contact area between a welding electrode and a sheet combination (hereinafter also referred to as a shoulder crack), occurs from lower welding current values than a crack that occurs directly under an electrode.
On one hand, from the viewpoint of securing joint strength, securing a nugget of a defined size or larger is important. However, the larger the thickness ratio of an outermost steel sheet in a sheet combination (hereinafter also referred to as a surface layer steel sheet; in contact with an electrode during welding), the more difficult it becomes to secure a nugget diameter of a desired size between the surface layer steel sheet and a steel sheet adjacent to the surface layer steel sheet. Here, the thickness ratio of the surface layer steel sheet is a value obtained by dividing the total thickness of steel sheets of the sheet combination by the thickness of the surface layer steel sheet. Further, in implementation during automobile assembly, disturbances may occur during welding. For example, there may be a gap between a fixed welding electrode and a sheet combination, or between steel sheets of a sheet combination. In such cases, it also becomes difficult to secure a nugget diameter of the desired size.
In this regard, nugget diameter can be increased by setting a larger current value during welding. However, when the current value during welding is set to a large value, then, for example, there is an increased risk of expulsion causing large deformation of a welded portion, which increases the risk of the welded portion cracking, in particular increasing the risk of liquid metal embrittlement cracking, as typified by shoulder cracking.
The techniques described in PTL 1, 2, 4, and 5 are unable to both suppress the occurrence of cracks in the welded portion and secure a stable nugget diameter of the desired size when a thickness ratio of the surface layer steel sheet is large or a disturbance has a large effect, and improvement in this regard is desired at present. Improvement in this regard is desired not only for steel sheets for automobile use, but also for resistance spot welding of a galvanized steel sheet in other steel sheet applications.
Further, the technique of PTL 3 requires a process to remove the coated or plated layer from the steel sheet surface in advance (hereinafter also referred to as a coated or plated layer removal process), and therefore significantly increases manufacturing costs. Further, the coated or plated layer is removed from the steel sheet, which may lead to a decrease in corrosion resistance of the welded portion.
The present invention was developed in view of the current situation described above, and it would be helpful to provide a welded joint for which cracking of the welded portion is suppressed and nugget diameter is a desired size, even when at least one of the surface layer steel sheets of a sheet combination is a galvanized steel sheet and the thickness ratio of a surface layer steel sheet is large or a disturbance has a large effect.
Further, it would be helpful to provide a resistance spot welding method for resistance spot welding of a galvanized steel sheet that does not require a coated or plated layer removal process and that can both suppress cracking of the welded portion and secure a stable nugget diameter of a desired size, even when the thickness ratio of a surface layer steel sheet is large or a disturbance has a large effect.
Further, it would be helpful to provide a welded member including the welded joint and a method of producing same.

(Solution to Problem)

The inventors engaged in extensive studies and made the following discoveries.

The presence or absence of welded portion cracking, in particular shoulder cracking, in resistance spot welding of a galvanized steel sheet, is strongly influenced by deformation at the shoulder of a sheet combination that occurs during welding, in particular the angle of the shoulder. The angle of the shoulder is appropriately controlled in relation to the tensile strength and thickness of the galvanized steel sheet arranged as the surface layer steel sheet of a sheet combination (the outermost steel sheet in the sheet combination (in contact with the electrode during welding)), the total thickness of the steel sheets of the sheet combination, and the nugget diameter. Specifically, at least one of Expression (1) or Expression (2) below is satisfied. This effectively suppresses the occurrence of cracking of the welded portion.

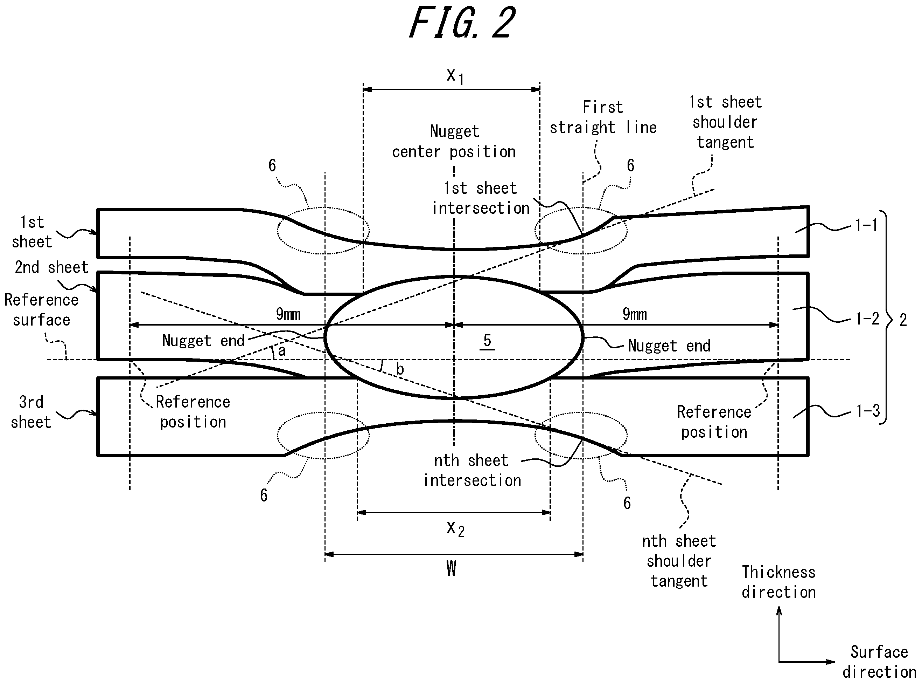

Here, an angle a of the shoulder of a first steel sheet of a sheet combination (hereinafter also referred to as shoulder angle a) is the angle that a tangent line to the shoulder of the first steel sheet makes with respect to the surface direction of the steel sheets of the sheet combination (perpendicular to the thickness direction, hereinafter referred to as the surface direction) in a cross-section taken along the thickness direction of a welded joint (sheet combination), as illustrated in FIG. 2. Here, the tangent line to the shoulder of the first sheet is the tangent line to the shoulder at an intersection between a first straight line parallel to the thickness direction passing through a nugget end (hereinafter also referred to as the first straight line) and the shoulder surface of the first steel sheet (hereinafter also referred to as the first sheet intersection). Further, an angle b of the shoulder of an nth steel sheet of the sheet combination (hereinafter also referred to as shoulder angle b) is the angle that a tangent line to the shoulder of the nth steel sheet makes with respect to the surface direction in a cross-section taken along the thickness direction of a welded joint, as illustrated in FIG. 2. Here, the tangent line to the shoulder of the nth sheet is the tangent line to the shoulder at an intersection between the first straight line and the shoulder surface of the nth steel sheet (hereinafter also referred to as the nth sheet intersection). In FIG. 2, the shoulder angles a and b are illustrated with one nugget end (here, the end on the right side of the drawing) as a representative example.

The welded joint is basically axially symmetrical about a nugget center position (welding electrode center position during welding), and therefore the shoulder angles a and b may be measured at any cross-section in the thickness direction of the welded joint passing through the center of the nugget (hereinafter also referred to as a welded joint cross-section). However, when the shoulder angles a and b vary with position (no axial symmetry), such as when the welding electrodes are off-center or have an inclined angle, maximum values are respectively taken as the shoulder angles a and b.

Further, when the surface direction differs among steel sheets of the sheet combination due to deformation during welding or the like, the surface of the steel sheet closest to the center position of the sheet combination in the thickness direction among the surfaces of the steel sheets of the sheet combination is a reference surface, and the surface direction of the reference surface is the surface direction. Further, when unambiguously determining the surface direction of a steel sheet is difficult due to deformation during welding or the like, reference positions are positions 9 mm away from the nugget center position at the surface of the reference steel sheet along the welded joint cross-section (when the shoulder angles are not axially symmetric, the welded joint cross-section where the shoulder angles are maximum values). Then, the direction of a line connecting the two reference positions may be the surface direction.

In addition, the nugget diameter W here is the major axis length (maximum diameter) of the nugget in the surface direction. That is, the nugget diameter W is measured, for example, as the distance between nugget edges in the surface direction in the welded joint cross-section. Similarly, a diameter WO of an intermediate stage nugget, described later, is also the major axis length (maximum diameter) of the intermediate stage nugget in the surface direction. That is, the diameter WO of the intermediate stage nugget is measured, for example, as the distance between intermediate stage nugget ends in the surface direction in a welded joint cross-section at the end of the first current process.

Further, expulsion is one of the causes of deformation of the shoulder of the sheet combination that occurs during welding. By controlling the occurrence of expulsion (the amount of spattered molten metal), cracking of the welded portion can be suppressed. Based on this point, the inventors conducted further studies to obtain a resistance spot welding method that can both suppress cracking of the welded portion and secure a stable nugget diameter of the desired size, even when the thickness ratio of the surface layer steel sheet is large or a disturbance has a large effect.

As a result, the inventors found that it is effective to simultaneously satisfy the following (a) to (c).

(a) The current passing process during welding is divided into two processes: a first current process and a second current process.
(b) In the first current process, the amount of heat input is controlled by adjusting the current pattern to form an intermediate stage of a nugget (hereinafter referred to as an intermediate stage nugget) while minimizing large deformation at the shoulders of the sheet combination.
(c) In the second current process, a current pattern of repeated current passing and cooling is used to obtain a nugget of final size by gradually enlarging the intermediate stage nugget while minimizing large deformation at the shoulders of the sheet combination.

That is, in the first current process, forming an intermediate stage nugget that is smaller than a final target nugget is necessary to avoid large deformation at the shoulders of the sheet combination in the second current process, which is a subsequent process. To achieve this, it is important to control heat input by adjusting the current pattern according to the thickness and tensile strength of a galvanized steel sheet disposed as a surface layer steel sheet of a sheet combination, as well as the total thickness of steel sheets of the sheet combination. In particular, it is important that current be passed under conditions such that the diameter of the intermediate stage nugget formed in the first current process satisfies at least one of the following Expressions (7) or (8). This allows the pressure-welded portion around the intermediate stage nugget (corona bond) to be formed sufficiently firmly to an extent necessary to secure the final nugget diameter obtained in the sheet combination and to achieve crack suppression in the welded portion. As a result, it is possible to enlarge the intermediate stage nugget while suppressing the amount of spattering expulsion in the second current process, even when the thickness ratio of the surface layer steel sheet is large or a disturbance has a large effect. This makes it possible to suppress deformation of the shoulders of the sheet combination and therefore suppress cracking in the welded portion after the second current process is completed, while achieving the desired nugget diameter.

Further, in the second current process, current greater than or equal to the current value at the end of the first current process can be used to enlarge the intermediate stage nugget. However, when heat input is excessive, large deformation occurs at the shoulders of the sheet combination. Therefore, it is important to use a current pattern that repeats cooling and current passing for at least a certain period of time. This allows the nugget to be enlarged gradually while minimizing large deformation at the shoulders of the sheet combination.

The present invention is based on these discoveries and further studies.

Primary features of the present invention are as follows.

1. A welded joint comprising a sheet combination of n overlapped steel sheets and a nugget joining the steel sheets, wherein

n is an integer greater than or equal to 2,
in the sheet combination, at least one of the first steel sheet or the nth steel sheet in order from the top is a galvanized steel sheet,
in the case of [Condition 1], a shoulder angle a of the first steel sheet of the sheet combination satisfies the following Expression (1),
in the case of [Condition 2], a shoulder angle b of the nth steel sheet of the sheet combination satisfies the following Expression (2),
in the case of [Condition 3], the shoulder angles a and b satisfy Expressions (1) and (2), respectively,
in the sheet combination, nugget diameter $x_k$, in mm, at each boundary level between a kth steel sheet and a (k+1)th steel sheet is $4.0\sqrt{t_k}$ or more, k is an integer from 1 to n-1, $t_k$ is the thickness in mm of the thinner of the kth steel sheet and the (k+1)th steel sheet,

$$a \leq \{(980/S_U)^{0.3} \times (1/T^{0.3}) \times (T/t_U)^{0.2}\} \times 11 \times W^{0.3} + 15 \qquad \ldots(1)$$

$$b \leq \{(980/S_L)^{0.3} \times (1/T^{0.3}) \times (T/t_L)^{0.2}\} \times 11 \times W^{0.3} + 15 \qquad \ldots(2)$$

where

a is the shoulder angle in ° of the first steel sheet of the sheet combination,
b is the shoulder angle in ° of the nth steel sheet of the sheet combination,
T is total thickness in mm of the n steel sheets,
$t_U$ is thickness in mm of the first steel sheet,
$t_L$ is thickness in mm of the nth steel sheet,
$S_U$ is tensile strength in MPa of the first steel sheet,
$S_L$ is tensile strength in MPa of the nth steel sheet,
W is nugget diameter in mm,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

2. The welded joint according to 1, above, wherein, in the case of [Condition 1], the shoulder angle a satisfies the following Expression (3),

in the case of [Condition 2], the shoulder angle b satisfies the following Expression (4),
in the case of [Condition 3], the shoulder angles a and b satisfy Expressions (3) and (4), respectively,

$$a \leq \{(980/S_U)^{0.3} \times (1/T^{0.3}) \times (T/t_U)^{0.2}\} \times 6 \times W^{0.3} + 9 \qquad ...(3)$$

$$b \leq \{(980/S_L)^{0.3} \times (1/T^{0.3}) \times (T/t_L)^{0.2}\} \times 6 \times W^{0.3} + 9 \qquad ...(4).$$

3. The welded joint according to 1 or 2, above, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad ...(5)$$

$$T/t_L > 2 \qquad ...(6).$$

4. A welded member comprising the welded joint according to any one of 1 to 3, above.
5. A resistance spot welding method of squeezing, by a pair of welding electrodes, a sheet combination of n overlapped steel sheets and passing a current while applying an electrode force to join the sheet combination, wherein

n is an integer greater than or equal to 2,
in the sheet combination, at least one of the first steel sheet or the nth steel sheet in order from the top is a galvanized steel sheet,
the resistance spot welding method comprising:

a first current process of forming an intermediate stage nugget; and
a second current process of enlarging the intermediate stage nugget,
wherein,
in the first current process, current is passed under conditions such that a diameter WO of the intermediate stage nugget satisfies,
in the case of [Condition 1], the following Expression (7),
in the case of [Condition 2], the following Expression (8),
in the case of [Condition 3], Expressions (7) and (8),
the second current process comprises:

cooling where no current is passed for a cooling time of 10 ms or more to less than 160 ms; and
current passing for a weld time of 15 ms or more to less than 200 ms with a current value greater than or equal to a current value of the first current process, the cooling and the current passing each being carried out at least once,

$$(T^{0.3}/t_U^{0.2}) \times (S_U/980)^{0.1} \times 2.0 \leq W0 \qquad ...(7)$$

$$(T^{0.3}/t_L^{0.2}) \times (S_L/980)^{0.1} \times 2.0 \leq W0 \qquad ...(8)$$

where

WO is diameter in mm of the intermediate stage nugget,
T is total thickness in mm of the n steel sheets,

$t_U$ is thickness in mm of the first steel sheet,
$t_L$ is thickness in mm of the nth steel sheet,
$S_U$ is tensile strength in MPa of the first steel sheet,
$S_L$ is tensile strength in MPa of the nth steel sheet,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

6. The resistance spot welding method according to 5, above, wherein current is passed in the first current process under conditions such that the diameter WO of the intermediate stage nugget satisfies,

in the case of [Condition 1], the following Expression (9),
in the case of [Condition 2], the following Expression (10),
in the case of [Condition 3], Expressions (9) and (10),

$$(T^{0.45}/t_U{}^{0.3}) \times (S_U/980)^{0.15} \times 2.0 \leq W0 \qquad \ldots(9)$$

$$(T^{0.35}/t_L{}^{0.3}) \times (S_L/980)^{0.15} \times 2.0 \leq W0 \qquad \ldots(10).$$

7. The resistance spot welding method according to 5 or 6, above, wherein current is passed in the first current process under conditions satisfying the following Expression (11),

$$If > Is \qquad \ldots(11)$$

where

Is is current value in kA at the start of current passing in the first current process, and
If is current value in kA at the end of current passing in the first current process.

8. The resistance spot welding method according to any one of 5 to 7, above, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad \ldots(5)$$

$$T/t_L > 2 \qquad \ldots(6).$$

9. The resistance spot welding method according to any one of 5 to 8, above, satisfying one or more of the following conditions (A) to (E),

(A) a welding electrode has an inclined angle relative to the sheet combination,
(B) the pair of welding electrodes are off-center,
(C) before pressing the sheet combination, there is a gap between the fixed welding electrode and the sheet combination,
(D) before pressing the sheet combination, there is at least one gap between the steel sheets of the sheet combination, and
(E) on the surface of the sheet combination, the shortest distance from the center of the welding contact point to an end face of the sheet combination is 10 mm or less.

10. A method of producing a welded member, comprising a process of joining a sheet combination of n overlapped steel sheets by the resistance spot welding method according to any one of 5 to 9, above, wherein n is an integer greater than or equal to 2.

(Advantageous Effect)

According to the present invention, a welded joint is obtainable for which cracking of the welded portion is suppressed and nugget diameter is a desired size, even when at least one of the surface layer steel sheets of a sheet combination is a galvanized steel sheet and the thickness ratio of a surface layer steel sheet is large or a disturbance has a large effect.

Further, a welded member including the welded joint of the present invention includes a galvanized steel sheet having high corrosion resistance disposed outermost, and is therefore extremely suitable for application to automotive parts and the like, in particular automotive parts used in locations that are exposed to rainwater.

BRIEF DESCRIPTION OF THE DRAWINGS

In the accompanying drawings:

FIG. 1 is a diagram schematically illustrating an example resistance spot welding method;
FIG. 2 is a diagram schematically illustrating an example of a welded joint cross-section; and
FIG. 3 is a diagram schematically illustrating an example of a sheet combination that has a sheet gap.

DETAILED DESCRIPTION

The following describes embodiments of the present invention. First, a welded joint according to an embodiment of the present invention is described.

[1] Welded joint

The welded joint according to an embodiment of the present invention is a welded joint comprising a sheet combination of n overlapped steel sheets and a nugget joining the steel sheets, wherein

n is an integer greater than or equal to 2,
in the sheet combination, at least one of the first steel sheet or the nth steel sheet in order from the top is a galvanized steel sheet,
in the case of [Condition 1], a shoulder angle a of the first steel sheet of the sheet combination satisfies the following Expression (1),
in the case of [Condition 2], a shoulder angle b of the nth steel sheet of the sheet combination satisfies the following Expression (2),
in the case of [Condition 3], the shoulder angles a and b satisfy Expressions (1) and (2), respectively,
in the sheet combination, nugget diameter $x_k$, in mm, at each boundary level between a kth steel sheet and a (k+1)th steel sheet is $4.0\sqrt{t_k}$ or more, k is an integer from 1 to n-1, and $t_k$ is the thickness in mm of the thinner of the kth steel sheet and (k+1)th steel sheet.

$$a \leq \{(980/S_U)^{0.3} \times (1/T^{0.3}) \times (T/t_U)^{0.2}\} \times 11 \times W^{0.3} + 15 \qquad \ldots(1)$$

$$b \leq \{(980/S_L)^{0.3} \times (1/T^{0.3}) \times (T/t_L)^{0.2}\} \times 11 \times W^{0.3} + 15 \qquad \ldots(2)$$

Here,

a is the shoulder angle in ° of the first steel sheet of the sheet combination,
b is the shoulder angle in ° of the nth steel sheet of the sheet combination,
T is total thickness in mm of the n steel sheets,
$t_U$ is thickness in mm of the first steel sheet,
$t_L$ is thickness in mm of the nth steel sheet,

$S_U$ is tensile strength in MPa of the first steel sheet,
$S_L$ is tensile strength in MPa of the nth steel sheet, and
W is nugget diameter in mm.

Further, [Condition 1] to [Condition 3] are as follows.

[Condition 1]

Of the first steel sheet and the nth steel sheet of the sheet combination, only the first steel sheet is a galvanized steel sheet.

[Condition 2]

Of the first steel sheet and the nth steel sheet of the sheet combination, only the nth steel sheet is a galvanized steel sheet.

[Condition 3]

Of the first steel sheet and the nth steel sheet of the sheet combination, both the first steel sheet and the nth steel sheet are galvanized steel sheets.
Here, the sheet combination is n steel sheets stacked on top of each other, and at least one of the first steel sheet and the nth steel sheet in order from the top, that is, at least one of the surface layer steel sheets of the sheet combination, is a galvanized steel sheet. The order from the top here is, for example, the order from the top in the vertical direction when the sheet combination is arranged so that surfaces of the sheet combination are parallel to the horizontal plane.
Further, a galvanized steel sheet is a steel sheet that has a zinc or zinc alloy coated or plated layer on one or both surfaces of the base steel sheet, such as a hot-dip galvanized steel sheet or a galvannealed steel sheet. When a steel sheet with a zinc or zinc alloy coated or plated layer on one surface of the base steel sheet is used as the first steel sheet or the nth steel sheet, the zinc or zinc alloy coated or plated layer is preferably outermost in the sheet combination. Here, the zinc or zinc alloy coated or plated layer is a coated or plated layer having a zinc content of 1 mass% or more. The zinc content is preferably 30 % or more. The term zinc or zinc alloy coated or plated layer includes, for example, a hot-dip galvanized layer, a galvannealed layer, an electrogalvanized layer, as well as a zinc alloy coated or plated layer containing a total of less than 50 mass% of alloying elements such as aluminum, magnesium, silicon, nickel, and iron. Further, as (a steel sheet including) a zinc alloy coated or plated layer, examples include Galfan (Zn - 5 mass% Al) and Ecogal® (Ecogal is a registered trademark in Japan, other countries, or both) (Zn - 5 mass% Al - 1 mass% or less Mg and Ni). Further, as a zinc alloy coated or plated layer, examples include an aluminum-zinc alloy coated or plated layer that contains a total of 67 mass% or more of aluminum and zinc and less than 33 mass% of alloying elements such as magnesium, silicon, nickel, and iron (for example, Galvalume (55 mass% Al - 43.4 mass% Zn - 1.6 mass% Si), and the like). The zinc or zinc alloy coated or plated layer preferably has a melting point lower than that of the base steel sheet. Further, the balance other than the zinc and alloying elements described above is inevitable impurity. Further, there is no particular limitation for the base steel sheet. For example, steel sheets having various strengths can be applied, from mild steel having 270 MPa grade tensile strength (hereinafter also referred to as TS) to a steel sheet having 490 MPa grade to 2500 MPa grade TS.
In addition, a galvanized steel sheet as described above may be used for a steel sheet other than the first steel sheet and the nth steel sheet out of the steel sheets of the sheet combination. Further, a steel sheet without coating or plating may be used. For example, steel sheets having various strengths may be used, from mild steel having 270 MPa grade TS to a steel sheet having 490 MPa grade to 2500 MPa grade TS. When the first steel sheet is a galvanized steel sheet, the nth steel sheet may be a galvanized steel sheet as described above, or a steel sheet without coating or plating as described above. The same is true for the first steel sheet when the nth steel sheet is a galvanized steel sheet.
The thickness of each of the steel sheets of the sheet combination is not particularly limited. For example, thickness is preferably 0.4 mm or more. Thickness is preferably 3.2 mm or less. Steel sheets having a thickness of 0.4 mm or more to 3.2 mm or less are suitable for use as members for automobiles.
Further, the number of overlapped steel sheets in a sheet combination, n, is an integer greater than or equal to 2. An upper limit of n is not particularly limited. For example, n is preferably 7 or less.
In the welded joint according to an embodiment of the present invention, it is important to satisfy at least one of Expressions (1) or (2) for the shoulder angle a of the first steel sheet of the sheet combination and the shoulder angle b of the nth steel sheet of the sheet combination, respectively, depending on [Condition 1] to [Condition 3], as described above. Here, shoulder refers to a shoulder at an indentation on the surface (front and back) of the sheet combination, as illustrated in FIG. 2. In the drawings, reference signs 1-1 to 1-3 indicate steel sheets, 2 indicates a sheet combination, 5 indicates a nugget, and 6 indicates a shoulder. Further, the indentations on the surfaces of the sheet combination (front and back surfaces) are welding electrode marks caused by the pressure applied by the welding electrodes during welding, and the nugget is located between the indentations.

Shoulder angles a and b satisfy at least one of Expressions (1) or (2), depending on [Condition 1] to [Condition 3].

As mentioned above, the presence or absence of welded portion cracking, in particular shoulder cracking, in resistance spot welding of a galvanized steel sheet is strongly influenced by deformation at the shoulder of a sheet combination that occurs during welding, or in other words, by the shoulder angles a and b. By appropriately controlling the shoulder angles a and b in relation to the tensile strength and thickness of a galvanized steel sheet arranged as the surface layer steel sheet of a sheet combination, the total thickness of the steel sheets of the sheet combination, and the nugget diameter W, occurrence of welded portion cracking can be effectively suppressed.

Specifically, occurrence of welded portion cracking can be effectively suppressed by,

in the case of [Condition 1], the shoulder angle a satisfying Expression (1),
in the case of [Condition 2], the shoulder angle b satisfying Expression (2),
and, in the case of [Condition 3], the shoulder angles a and b satisfying Expressions (1) and (2), respectively.

The shoulder angles a and b and the nugget diameter W are measured as described above.

Further, in the case of [Condition 1], the shoulder angle a preferably satisfies Expression (3).

In the case of [Condition 2], the shoulder angle b preferably satisfies Expression (4).

In the case of [Condition 3], the shoulder angles a and b preferably satisfy Expressions (3) and (4), respectively. This allows for more effective suppression of cracking in the welded portion, and in particular allows for effective suppression of even the occurrence of minute LME cracks of less than 100 $\mu$m in length at the shoulders.

$$a \leq \{(980/S_U)^{0.3} \times (1/T^{0.3}) \times (T/t_U)^{0.2}\} \times 6 \times W^{0.3} + 9 \qquad \ldots(3)$$

$$b \leq \{(980/S_L)^{0.3} \times (1/T^{0.3}) \times (T/t_L)^{0.2}\} \times 6 \times W^{0.3} + 9 \qquad \ldots(4)$$

Lower limits of the shoulder angles a and b are not particularly limited and may be 0°. The shoulder angles a and b are preferably respectively 1° or more.

Further, preferably at least one of Expressions (5) or (6) is satisfied. As mentioned above, in a sheet combination of material to be joined with large values for $T/t_U$ or $T/t_L$, that is, a sheet combination where a boundary between steel sheets of the sheet combination is located away from the center position of the thickness of the entire sheet combination (1/2 thickness position of the sheet combination), it may be difficult to secure the size of the nugget. Therefore, when such a sheet combination is used, the advantageous effects of the present invention are more effectively exhibited. Further, the occurrence of such cracks is more preferably suppressed in a sheet combination that satisfies at least one of the following Expressions (12) or (13).

$$T/t_U > 2 \qquad \ldots(5)$$

$$T/t_L > 2 \qquad \ldots(6)$$

$$T/t_U > 3 \qquad \ldots(12)$$

$$T/t_L > 3 \qquad \ldots(13)$$

Nugget diameter $x_k$ (mm) at boundary level between kth steel sheet and (k+1)th steel sheet: $4.0\sqrt{t_k}$ or more

From the viewpoint of ensuring joint strength, the nugget diameter $x_k$ (mm) at each boundary level between the kth steel sheet and the (k+1)th steel sheet is $4.0\sqrt{t_k}$ or more. An upper limit of the nugget diameter $x_k$ is not particularly limited. From the viewpoint of suppressing expulsion, the nugget diameter $x_k$ is preferably to.$0\sqrt{t_k}$ or less. Here, k is an integer from 1 to n-1 and $t_k$ is the thickness (mm) of the kth steel sheet or the (k+1)th steel sheet, whichever is thinner. The nugget is a point-like welded portion that joins the steel sheets of a sheet combination. Further, the nugget is a portion of the sheet combination where the steel sheets have melted and solidified.

[2] Welded member

The welded member according to an embodiment of the present invention is a welded member including the welded joint described above. The welded member according to an embodiment of the present invention includes a galvanized steel sheet having high corrosion resistance disposed outermost, and is therefore suitable for application to automotive parts and the like, in particular automotive parts used in locations that are exposed to rainwater. The welded member according to an embodiment of the present invention may further include another welded joint (welded portion) in addition to the welded joint described above.

[3] Resistance spot welding method

The resistance spot welding method according to an embodiment of the present invention is a resistance spot welding method of squeezing, by a pair of welding electrodes, a sheet combination of n overlapped steel sheets and passing a current while applying an electrode force to join the sheet combination, wherein

n is an integer greater than or equal to 2,
in the sheet combination, at least one of the first steel sheet or the nth steel sheet in order from the top is a galvanized steel sheet,
the resistance spot welding method comprising:
a first current process of forming an intermediate stage nugget; and
a second current process of enlarging the intermediate stage nugget,
wherein,
in the first current process, current is passed under conditions such that a diameter WO of the intermediate stage nugget satisfies,
in the case of [Condition 1], the following Expression (7),
in the case of [Condition 2], the following Expression (8),
in the case of [Condition 3], Expressions (7) and (8),
the second current process comprises:

cooling where no current is passed for a cooling time of 10 ms or more to less than 160 ms; and
current passing for a weld time of 15 ms or more to less than 200 ms with a current value greater than or equal to a current value of the first current process, the cooling and the current passing each being carried out at least once.

$$(T^{0.3}/t_U^{0.2}) \times (S_U/980)^{0.1} \times 2.0 \leq W0 \qquad \ldots (7)$$

$$(T^{0.3}/t_L^{0.2}) \times (S_L/980)^{0.1} \times 2.0 \leq W0 \qquad \ldots (8)$$

Here,

WO is diameter in mm of the intermediate stage nugget,
T is total thickness in mm of the n steel sheets,
$t_U$ is thickness in mm of the first steel sheet,
$t_L$ is thickness in mm of the nth steel sheet,
$S_U$ is tensile strength in MPa of the first steel sheet, and
$S_L$ is tensile strength in MPa of the nth steel sheet.

Further, [Condition 1] to [Condition 3] are as described above.

For example, as illustrated in FIG. 1, the pair of welding electrodes 3, 4 (the upper electrode 3 and the lower electrode 4) squeeze the sheet combination 2 of the overlapped steel sheets 1-1, 1-2 (also referred to as the upper steel sheet 1-1 and the lower steel sheet 1-2). Pressure is applied by the welding electrodes 3, 4 from above and below while a welding current is passed between the welding electrodes 3, 4 to join the sheet combination 2. Any welding device that includes a pair of upper and lower welding electrodes and is capable of freely controlling each of the electrode force and the welding current during welding may be used in the resistance spot welding method according to an embodiment of the present invention. . Type (stationary, robot gun, and the like), electrode shape, and the like are not particularly limited. Further, a configuration for adding and controlling electrode force is not particularly limited, and a conventionally known device such as an air cylinder, a servo motor, and the like may be used. Further, a configuration for supplying current and controlling the current value during current passing is not particularly limited, and any conventionally known device may be used. Further, the current during current passing may be direct current or alternating current. In the case of alternating current, "current" means "effective current". Further, type of tip of the upper electrode 3 and the lower electrode 4 is also not particularly limited. Examples include a dome-radius (DR) type, radius (R) type, dome (D) type, and the like, as described in Japanese Industrial Standard JIS C 9304:1999. Further, tip diameter of each electrode is, for example, 4 mm to 16 mm.

In the resistance spot welding method according to an embodiment of the present invention, the current process during welding is divided into two processes, the first current process and the second current process, as described above. In the first current process, the amount of heat input is controlled by adjusting the current pattern to form the intermediate stage nugget while minimizing large deformation at the shoulders of the sheet combination. Further, in the second current process, a current pattern of repeated current passing and cooling is used to obtain a nugget of final size by gradually enlarging the intermediate stage nugget while minimizing large deformation at the shoulders of the sheet combination.

The first current process and the second current process are described below. The description of the sheet combination used in the resistance spot welding method according to an embodiment of the present invention is the same as the description of the sheet combination under [1] Welded joint, and is therefore omitted here.

• First current process

In the first current process, the nugget needs to be formed so that no large deformation occurs at the shoulders of the sheet combination in the second current process, which is a subsequent process. To achieve this, it is important to control heat input by adjusting the current pattern according to the thickness and tensile strength of a galvanized steel sheet disposed as a surface layer steel sheet of a sheet combination, as well as the total thickness of steel sheets of the sheet combination. In particular, it is important to perform current passing under the condition that the diameter of the intermediate stage nugget WO (diameter of the nugget obtained at the end of the first current process) satisfies at least one of Expressions (7) or (8), according to [Condition 1] to [Condition 3].

Current condition: current is passed under conditions such that the diameter WO of the intermediate stage nugget satisfies at least one of Expressions (7) or (8), according to [Condition 1] to [Condition 3].

As described above, in the first current process, the amount of heat input is controlled by adjusting the current pattern, and in particular, current passing is performed under the condition that the diameter WO of the intermediate stage nugget satisfies at least one of Expressions (7) or (8), according to [Condition 1] to [Condition 3]. This allows the pressure-welded portion around the intermediate stage nugget (corona bond) to be formed sufficiently firmly to an extent necessary to secure the final nugget diameter obtained in the sheet combination and to achieve crack suppression in the welded portion. As a result, it is possible to enlarge the intermediate stage nugget while suppressing the amount of spattering expulsion in the second current process, even when the thickness ratio of the surface layer steel sheet is large or a disturbance has a large effect. This makes it possible to suppress deformation of the shoulders of the sheet combination and therefore suppress cracking in the welded portion after the second current process is completed, while achieving the desired nugget diameter.

Further, current is preferably passed under conditions such that,

in the case of [Condition 1], Expression (9) is satisfied,
in the case of [Condition 2], Expression (10) is satisfied, and
in the case of [Condition 3], Expressions (9) and (10) are satisfied.

This more effectively suppresses the occurrence of cracking of the welded portion. In particular, it is possible to effectively suppress even the occurrence of minute LME cracks of less than 100 $\mu$m in length at the shoulders.

$$(T^{0.45}/t_U^{0.3}) \times (S_U/980)^{0.15} \times 2.0 \leq W0 \qquad \ldots(9)$$

$$(T^{0.35}/t_L^{0.3}) \times (S_L/980)^{0.15} \times 2.0 \leq W0 \qquad \ldots(10)$$

An upper limit of the diameter WO of the intermediate stage nugget is not particularly limited, but an excessively large value for WO may increase spattering of expulsion in the first current process. Therefore, current is passed under conditions where the diameter WO of the intermediate stage nugget preferably becomes W $\times$ 0.9 mm or less. The diameter WO of the intermediate stage nugget more preferably becomes W $\times$ 0.8 mm or less. As mentioned above, W is the nugget diameter of the (finally obtained) welded joint (diameter of the nugget at the end of the second current process).

When current is passed under conditions where the diameter WO of the intermediate stage nugget satisfies the above range (hereinafter also referred to as "appropriate conditions"), other conditions are not particularly limited, and a conventional method may be followed. Note that the appropriate conditions vary by sheet combination. In this regard, for example, the same sheet combination as the material to be joined is prepared, and the current value of the first current process (hereinafter also referred to simply as I1) is selected variously from the range of 2.0 kA to 15.0 kA, the weld time is selected from 15 ms to 2000 ms, and the electrode force is selected from 1.5 kN to 10.0 kN. Then, preliminary weld tests are performed according to the various conditions selected. This allows the appropriate conditions to be obtained for each sheet combination.

In the first current process, use of upslope current is preferred. For example, when the current value at the start of current passing is Is (kA) and the current value at the end of current passing is If (kA), the following Expression (11) is preferably satisfied. This allows the effect of firmly joining the pressure-welded portion (corona bond) around the nugget and the effect of forming a large intermediate stage nugget while suppressing deformation in the first current process to be more effectively obtained.

$$If > Is \qquad ...(11)$$

Is is preferably 2.0 kA to 14.0 kA. If is preferably 3.0 kA to 15.0 kA.

Further, when the current value changes during current passing, the maximum current value in the first current process (that is, the current value at the end of current passing when upslope current is used, as described above) is considered as I1 (current value in the first current process).


• Second current process

In the second current process, a current pattern of repeated current passing and cooling is used to obtain a nugget of final size by gradually enlarging the intermediate stage nugget formed in the first current process while minimizing large deformation at the shoulders of the sheet combination.

Cooling in the no-current state for cooling time: 10 ms or more to less than 160 ms, and current passing for weld time: 15 ms or more to less than 200 ms at current value: I1 or more, each at least once

As mentioned above, in the second current process, it is necessary to enlarge the intermediate stage nugget gradually while minimizing large deformation at the shoulders of the sheet combination. Therefore, in the second current process, the current pattern repeats cooling and current passing. In particular, cooling is performed in the no-current state for a cooling time of 10 ms or more to less than 160 ms, and current is passed for a weld time of 15 ms or more to less than 200 ms at a current value of I1 or more, each at least once. From the viewpoint of more advantageously obtaining the effects described above, the number of cycles of cooling and current passing is preferably two or more. The number of cycles is more preferably three or more. When the number of cycles of cooling and current passing exceeds ten, the effects described above may become saturated, while at the same time, production efficiency may decrease. Therefore, the number of cycles of cooling and current passing is preferably ten or less.

Further, the cooling does not provide sufficient cooling effect when the cooling time per cycle is less than 10 ms. In such a case, large deformation is more likely to occur at the shoulders of the sheet combination, and cracking of the welded portion is more likely to occur. Therefore, cooling time per cycle is 10 ms or more. From the viewpoint of enlarging the intermediate stage nugget gradually while more advantageously suppressing large deformation at the shoulders of the sheet combination, the cooling time per cycle is preferably 15 ms or more. On the other hand, when the cooling time per cycle is 160 ms or more, the effect of enlarging the intermediate stage nugget by the current pattern of repeated cooling and current passing may not be sufficient. Therefore, the cooling time per cycle is less than 160 ms. The cooling time per cycle is preferably 120 ms or less. Cooling is performed as a no-current state, and non-welding time is the cooling time.

Further, in the current passing, when the weld time per cycle is less than 15 ms, the intermediate stage nugget cannot be sufficiently enlarged in the second current process due to insufficient heat input. Therefore, the weld time per cycle is 15 ms or more. On the other hand, when the weld time per cycle is 200 ms or more, excessive heat input is applied with a single current application, and large deformation of the welded portion, and thus cracking, is likely to occur. Therefore, the weld time per cycle is less than 200 ms. The weld time per cycle is preferably 160 ms or less.

In addition, in the current passing described above, the current value needs to be I1 or more, that is, greater than or equal to the current value of the first current process, in order to enlarge the intermediate stage nugget gradually. The current value in the current passing described above is preferably 1.1 × I1 or more. An upper limit of the current value in the current passing described above is not particularly limited. From the viewpoint of suppressing the occurrence of expulsion, the current value in the current passing described above is preferably 20 kA or less.

The cooling time per cycle in the cooling may be the same or different for each cooling cycle. The same applies to the weld time and current value in the current passing described above.

Conditions other than those described above are not particularly limited, and a conventional method may be used. For example, the electrode force may be 1.5 kN to 10.0 kN. The electrode force may be the same or a different value than in the first current process. The current value during current passing may be constant or may be varied as appropriate during current passing, such as in upslope current, as long as the current value I1 or more.

Conditions other than those described above are not particularly limited, and a conventional method may be used.

Further, the resistance spot welding method according to an embodiment of the present invention obtains a nugget diameter of the desired size while suppressing the occurrence of cracking in the welded portion regardless of the influence of a disturbance and regardless of sheet combination. Therefore, the resistance spot welding method according to an embodiment of the present invention is particularly suitable when applied to difficult welding conditions, for example, one or more of the following conditions (A) to (E):

(A) a welding electrode has an inclined angle relative to the sheet combination,
(B) the pair of welding electrodes are off-center,
(C) before pressing the sheet combination, there is a gap between the fixed welding electrode and the sheet combination (hereinafter also referred to as an electrode-sheet combination gap),
(D) before pressing the sheet combination, there is at least one gap between the steel sheets of the sheet combination (hereinafter also referred to as a sheet gap), and
(E) on the surface of the sheet combination, the shortest distance from the center of the welding contact point to an end face of the sheet combination (hereinafter also referred to as a shortest end face distance) is 10 mm or less.

Here, the "inclined angle" in (A) is the angle of the axis of the welding electrode relative to the perpendicular direction to the surface of the sheet combination. The "welding electrode has an inclined angle relative to the sheet combination" means a state in which the inclined angle is not 0°, that is, the perpendicular direction to the surface of the sheet combination and the axis of the welding electrode (at least one of the axis of the upper electrode or the axis of the lower electrode) are not parallel to each other.

The "pair of welding electrodes are off-center" in (B) means a state in which the axis of the upper electrode and the axis of the lower electrode of the welding electrodes are not aligned. Further, the amount of misalignment is the distance between the axis of the upper electrode and the axis of the lower electrode of the welding electrodes.

The "before pressing the sheet combination" in (C) and (D) means after the sheet combination is placed in a welding device including a fixed welding electrode (corresponding to the lower electrode as one example) and a driven welding electrode (corresponding to the upper electrode as one example), and before the driven welding electrode is moved to start pressing the sheet combination.

The resistance spot welding method according to an embodiment of the present invention is applicable not only to a sheet combination of two steel sheets overlapped, but also to a sheet combination of three or more steel sheets overlapped.

[4] Method of producing welded member

The method of producing a welded member according to an embodiment of the present invention includes the process of joining a sheet combination by the resistance spot welding method. This allows a stable nugget diameter of the desired size to be secured while suppressing deformation of the shoulders of the sheet combination and therefore suppressing cracking of the welded portion. As a result, it is possible to produce various welded members with high production efficiency, in particular automotive parts and the like that include a galvanized steel sheet having high corrosion resistance on an outermost surface.

EXAMPLES

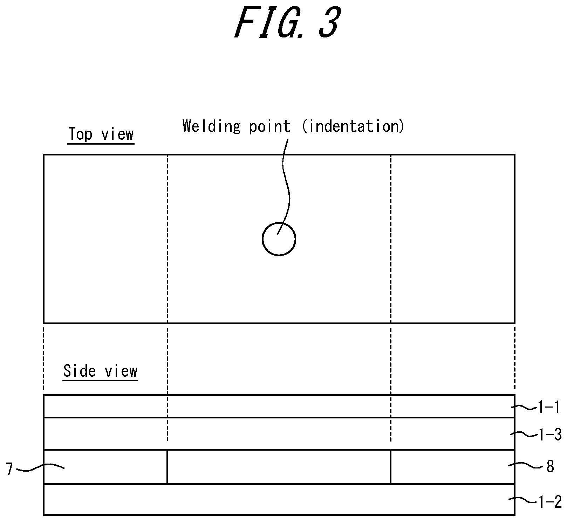

Resistance spot welding was performed on the sheet combinations listed in Table 1 under the conditions listed in Table 2 to produce welded joints. For each sample number, disturbances (welding conditions (A) to (E) as described above) were simulated as listed in Table 1. In Table 1, "-" in columns (A), (B), (C), and (E) means that the corresponding condition was not satisfied. Further, in a sheet combination simulating a sheet gap of (D), for example, three 30 mm × 100 mm steel sheets were stacked on top of each other and 30 mm × 25 mm spacers 7, 8 were placed between the second and third steel sheets to provide a 2 mm sheet gap, as illustrated in FIG. 3. Note that "0 mm" in the sheet gap column of (D) means no sheet gap. Further, in Table 1, "-" in column (E) means that the welded portion (nugget) was formed so that the center of the 30 mm × 100 mm steel sheet was the center of the weld contact point. Further, the first current process was performed with an upslope current, except for sample numbers 10, 21, and 22. For sample numbers 10, 21, and 22, current was passed at a constant current value. The second current process was performed in the order of cooling and then current passing, and each cycle of cooling and current passing was performed under the same conditions.

Further, resistance spot welding was performed at room temperature and with the welding electrode always being water cooled. Both the upper electrode (driven welding electrode) and the lower electrode (fixed welding electrode) used a DR-type electrode made of chromium copper having a tip diameter of 6 mm and a curvature radius of 40 mm.

Further, the electrode force was controlled by driving the upper electrode with a servo motor, and DC power was supplied during current passing. For all sample numbers, the sheet combinations were arranged so that the first steel sheet came into contact with the upper electrode (driven welding electrode).

The shoulder angles a and b of the sheet combination and the nugget diameter W were measured for the welded joints obtained in this way, according to the procedures described above. The measurement results are listed in Table 3.

Further, for the welded joints obtained, the nugget diameter $x_1$ at the boundary level between the first steel sheet and the second steel sheet was measured. For sheet combinations of three steel sheets, the nugget diameter $x_2$ at the boundary level between the second steel sheet and the third steel sheet was measured. For sheet combinations of four steel sheets, the nugget diameter $x_3$ at the boundary level between the third steel sheet and the fourth steel sheet was measured. The measurement results are listed in Table 3.

Further, surfaces and cross-sections of the nuggets of the welded joints were observed to visually check for shoulder cracks. The results are listed in Table 3.

In Table 3, A, B, and C in the shoulder cracking column mean the following, respectively.

A (pass, especially good): no cracking
B (pass): cracks occurred, but length was less than 100 $\mu$m
C (fail): cracks of 100 $\mu$m or more in length occurred

Further, the evaluation column in Table 3 indicates:

"Pass (excellent)" when the shoulder crack evaluation was A and the nugget diameter $x_k$ was $4.0\sqrt{t_k}$ or more,
"Pass (good)" when the shoulder crack evaluation was B and the nugget diameter $x_k$ was $4.0\sqrt{t_k}$ or more, and
"Fail" for cases other than the above, that is, when even one of the target properties could not be obtained.

Note that $t_1$ is the thickness of the thinner of the first steel sheet and the second steel sheet. $t_2$ is the thickness of the thinner of the second steel sheet and the third steel sheet. $t_3$ is the thickness of the thinner of the third steel sheet and the fourth steel sheet. Further, the nugget is a point-like welded portion joining steel sheets in a sheet combination. Further, the nugget is a portion of the sheet combination where the steel sheets have melted and solidified.

Further, additional samples were separately prepared under the same conditions as each sample number, but with current applied only up to the first current process. For each such sample, the diameter of the intermediate stage nugget, WO, was measured in the same manner as described above. The measurement results are listed in Table 2.

Table 1

| Sample No. | 1st steel sheet | | | | 2nd steel sheet | | | | 3rd steel sheet | | | | 4th steel sheet | | | | n | T | T/t-U | T/t-L | (A) | (B) | (C) | (D) | | | (E) |
|---|---|---|---|---|---|---|---|---|---|---|---|---|---|---|---|---|---|---|---|---|---|---|---|---|---|---|---|
| | R-ef si-gn | Strength | Type | Thick-ness | R-ef si-gn | Strength | Ty-pe | Thick-ness | R-ef si-gn | Strength | Type | Thick-ness | R-ef si-gn | Strength | Ty-pe | Thick-ness | | | | | Inclina-tion angle | Misalign-ment | Elec-trode-sheet combina-tion gap | 1st-2nd sheet gap | 2nd-3rd sheet gap | 3rd-4th sheet gap | Short-est dis-tance to end face |
| | | MPa | | mm | | MPa | | mm | | MPa | | mm | | MPa | | mm | Sheets | mm | | | ° | mm | mm | mm | mm | mm | mm |
| 1 | A | 590 | GA | 0.7 | B | 1180 | GA | 1.4 | c | 1470 | GA | 1.4 | - | - | - | - | 3 | 3.5 | 5.00 | 2.50 | - | - | - | 0 | 2 | - | - |
| 2 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 3 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 4 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 5 | A | 590 | GA | 0.7 | B | 1180 | GA | 1.4 | C | 1470 | GA | 1.4 | - | - | - | - | 3 | 3.5 | 5.00 | 2.50 | - | 1 | - | 0 | 2 | - | - |
| 6 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | 5 |
| 7 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 8 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 9 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 10 | A | 590 | GA | 07 | B | 1180 | GA | 1.4 | C | 1170 | GA | 1.4 | - | - | - | - | 3 | 3.5 | 5.00 | 2.50 | - | - | - | 0 | 2 | - | - |
| 11 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 12 | A | 590 | GA | 0.7 | B | 1180 | GA | 1.4 | C | 1470 | GA | 1.4 | - | - | - | - | 3 | 3.5 | 5.00 | 2.50 | - | 1 | - | 0 | 2 | - | - |

| Sam-ple No. | 1st steel sheet | | | | 2nd steel sheet | | | | 3rd steel sheet | | | | 4th steel sheet | | | | n | T | T/t-U | T/t-L | Disturbance (A) Inclina-tion angle | (B) Misalign-ment | (C) Elec-trode-sheet combina-tion gap | (D) 1st-2nd sheet gap | 2nd-3rd sheet gap | 3rd-4th sheet gap | (E) Short-est dis-tance to end face |
|---|---|---|---|---|---|---|---|---|---|---|---|---|---|---|---|---|---|---|---|---|---|---|---|---|---|---|---|
| | R-ef-si-gn | Stren-gth | Type | Thick-ness | R-ef-si-gn | Stren-gth | Ty-pe | Thick-ness | R-ef-si-gn | Stren-gth | Type | Thick-ness | R-ef-si-gn | Stren-gth | Ty-pe | Thick-ness | | | | | | | | | | | |
| | | MPa | | mm | | MPa | | mm | | MPa | | mm | | MPa | | mm | She-ets | m-m | | | ° | mm | mm | mm | mm | mm | mm |
| 13 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | 5 |
| 14 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 15 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 16 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 17 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 18 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 19 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 20 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 21 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 22 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | - |
| 23 | A | 590 | GA | 0.7 | B | 1180 | GA | 1.4 | C | 1470 | GA | 1.4 | - | - | - | - | 3 | 3.-5 | 5.-00 | 2.-50 | - | 1 | - | 0 | 2 | - | - |
| 24 | A | 590 | GA | 0.7 | B | 1180 | GA | 1.4 | C | 1470 | GA | 1.4 | - | - | - | - | 3 | 3.-5 | 5.-00 | 2.-50 | - | - | - | 0 | 2 | - | 5 |

EP 4 484 044 B1

| Sam-ple No. | 1st steel sheet | | | | 2nd steel sheet | | | | 3rd steel sheet | | | | 4th steel sheet | | | | n | T | T/t-U | T/t-L | Disturbance | | | | | | |
| | R-ef-si-gn | Stren-gth | Type | Thick-ness | R-ef-si-gn | Stren-gth | Ty-pe | Thick-ness | R-ef-si-gn | Stren-gth | Type | Thick-ness | R-ef-si-gn | Stren-gth | Ty-pe | Thick-ness | | | | | (A) Inclina-tion angle | (B) Misalign-ment | (C) Elec-trode-sheet combina-tion gap | (D) 1st-2nd sheet gap | 2nd-3rd sheet gap | 3rd-4th sheet gap | (E) Short-est dis-tance to end face |
| | | MPa | | mm | | MPa | | mm | | MPa | | mm | | MPa | | mm | She-ets | m-m | | | ° | mm | mm | mm | mm | mm | mm |
| 25 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 26 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 27 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 28 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 29 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 30 | A | 590 | GA | 0.7 | B | 1180 | GA | 1.4 | C | 1470 | GA | 1.4 | - | - | - | - | 3 | 3.5 | 5.00 | 2.50 | - | - | - | 0 | 2 | - | - |
| 31 | D | 590 | GA | 0.6 | E | 1180 | CR | 1.2 | F | 270 | GA | 0.8 | G | 1470 | GA | 1.6 | 4 | 4.2 | 7.00 | 2.63 | 4 | - | 2 | 1 | 1 | 0 | - |
| 32 | D | 590 | GA | 0.6 | E | 1180 | CR | 1.2 | F | 270 | GA | 0.8 | G | 1470 | GA | 1.6 | 4 | 4.2 | 7.00 | 2.63 | 4 | - | 2 | 1 | 1 | 0 | - |
| 33 | D | 590 | GA | 0.6 | E | 1180 | CR | 1.2 | F | 270 | GA | 0.8 | G | 1470 | GA | 1.6 | 4 | 4.2 | 7.00 | 2.63 | 4 | - | 2 | 1 | 1 | 0 | - |
| 34 | H | 590 | CR | 0.7 | I | 1180 | GA | 1.4 | J | 1470 | GA | 1.4 | - | - | - | - | 3 | 3.5 | 5.00 | 2.50 | - | - | - | 0 | 2 | - | - |
| 35 | H | 590 | CR | 0.7 | I | 1180 | GA | 1.4 | J | 1470 | GA | 1.4 | - | - | - | - | 3 | 3.5 | 5.00 | 2.50 | - | - | - | 0 | 2 | - | - |
| 36 | H | 590 | CR | 0.7 | I | 1180 | GA | 1.4 | J | 1470 | GA | 1.4 | - | - | - | - | 3 | 3.5 | 5.00 | 2.50 | - | - | - | 0 | 2 | - | - |

| Sample No. | 1st steel sheet | | | | 2nd steel sheet | | | | 3rd steel sheet | | | | 4th steel sheet | | | | n | T | T/t-U | T/t-L | Disturbance | | | | | | |
|---|---|---|---|---|---|---|---|---|---|---|---|---|---|---|---|---|---|---|---|---|---|---|---|---|---|---|---|
| | R-ef si-gn | Stren-gth | Type | Thick-ness | R-ef si-gn | Stren-gth | Ty-pe | Thick-ness | R-ef si-gn | Stren-gth | Type | Thick-ness | R-ef si-gn | Stren-gth | Ty-pe | Thick-ness | | | | | (A) Inclina-tion angle | (B) Misalign-ment | (C) Elec-trode-sheet combina-tion gap | (D) 1st-2nd sheet gap | 2nd-3rd sheet gap | 3rd-4th sheet gap | (E) Short-est dis-tance to end face |
| | | MPa | | mm | | MPa | | mm | | MPa | | mm | | MPa | | mm | Sheets | mm | | | ° | mm | mm | mm | mm | mm | mm |
| 37 | H | 590 | CR | 0.7 | I | 1180 | GA | 1.4 | J | 1470 | GA | 1.4 | - | - | - | - | 3 | 3.-5 | 5.-00 | 2.-50 | - | - | - | 0 | 2 | - | - |
| 38 | M | 590 | GI | 0.7 | N | 1180 | CR | 1.4 | O | 1470 | GI | 1.4 | - | - | - | - | 3 | 3.-5 | 5.-00 | 2.-50 | - | - | - | 0 | 2 | - | - |
| 39 | M | 590 | GI | 0.7 | N | 1180 | CR | 1.4 | O | 1470 | GI | 1.4 | - | - | - | - | 3 | 3.-5 | 5.-00 | 2.-50 | - | - | - | 0 | 2 | - | - |
| 40 | M | 590 | GI | 0.7 | N | 1180 | CR | 1.4 | O | 1470 | GI | 1.4 | - | - | - | - | 3 | 3.-5 | 5.-00 | 2.-50 | - | - | - | 0 | 2 | - | - |
| 41 | P | 590 | GF | 0.7 | Q | 1180 | CR | 1.4 | R | 1470 | GF | 1.4 | - | - | - | - | 3 | 3.-5 | 5.-00 | 2.-50 | - | - | - | 0 | 2 | - | - |
| 42 | P | 590 | GF | 0.7 | Q | 1180 | CR | 1.4 | R | 1470 | GF | 1.4 | - | - | - | - | 3 | 3.-5 | 5.-00 | 2.-50 | - | - | - | 0 | 2 | - | - |
| 43 | P | 590 | GF | 0.7 | Q | 1180 | CR | 1.4 | R | 1470 | GF | 1.4 | - | - | - | - | 3 | 3.-5 | 5.-00 | 2.-50 | - | - | - | 0 | 2 | - | - |
| 44 | S | 590 | Ecogal | 0.7 | T | 1180 | CR | 1.4 | U | 1470 | Ecogal | 1.4 | - | - | - | - | 3 | 3.-5 | 5.-00 | 2.-50 | - | - | - | 0 | 2 | - | - |
| 45 | S | 590 | Ecogal | 0.7 | T | 1180 | CR | 1.4 | U | 1470 | Ecogal | 1.4 | - | - | - | - | 3 | 3.-5 | 5.-00 | 2.-50 | - | - | - | 0 | 2 | - | - |
| 46 | S | 590 | Ecogal | 0.7 | T | 1180 | CR | 1.4 | U | 1470 | Ecogal | 1.4 | - | - | - | - | 3 | 3.-5 | 5.-00 | 2.-50 | - | - | - | 0 | 2 | - | - |
| 47 | V | 590 | GL | 0.7 | W | 1180 | CR | 1.4 | x | 1470 | GL | 1.4 | - | - | - | - | 3 | 3.-5 | 5.-00 | 2.-50 | - | - | - | 0 | 2 | - | - |
| 48 | V | 590 | GL | 0.7 | W | 1180 | CR | 1.4 | x | 1470 | GL | 1.4 | - | - | - | - | 3 | 3.-5 | 5.-00 | 2.-50 | - | - | - | 0 | 2 | - | - |

EP 4 484 044 B1

(continued)

| Sample No. | Sheet combination | | | | | | | | | | | | | | | | | | | Disturbance | | | | | | |
| | 1st steel sheet | | | | 2nd steel sheet | | | | 3rd steel sheet | | | | 4th steel sheet | | | | n | T | T/t-U | T/t-L | (A) | (B) | (C) | (D) | | | (E) |
| | R-ef si-gn | Stren-gth | Type | Thick-ness | R-ef si-gn | Stren-gth | Ty-pe | Thick-ness | R-ef si-gn | Stren-gth | Type | Thick-ness | R-ef si-gn | Stren-gth | Ty-pe | Thick-ness | | | | | Inclina-tion angle | Misalign-ment | Elec-trode-sheet combina-tion gap | 1s-t-2-nd sh-eet gap | 2n-d-3-rd sh-eet gap | 3r-d-4-th sh-eet gap | Short-est dis-tance to end face |
| | | MPa | | mm | | MPa | | mm | | MPa | | mm | | MPa | | mm | She-ets | m-m | | | ° | mm | mm | mm | mm | mm | mm |
| 49 | V | 590 | GL | 0.7 | W | 1180 | CR | 1.4 | x | 1470 | GL | 1.4 | - | - | - | - | 3 | 3.-5 | 5.-00 | 2.-50 | - | - | - | 0 | 2 | - | - |

GA: galvarmealed steel sheet GI: hot-dip galvanized steel sheet GF: Galfan steel sheet GL: Galvalume steel sheet CR: Steel sheet without coating (cold-rolled steel sheet)

EP 4 484 044 B1

[Table 2]

[Table 2]

Table 2

| Sample No. | Electrode force (kN) | First current process Current value — Upslope start current Is (kA) | Upslope end current If (kA) | I1 (kA) | Weld time (ms) | Expulsion occurrence | WO (mm) | Intermediate stage nugget — Expression (7) lower limit (1st sheet) | Expression (8) lower limit (nth sheet) | Expression (9) preferred lower limit (1st sheet) | Expression (10) preferred lower limit (nth sheet) | Second current process Cooling — Cooling time (ms) | Current passing — Current value (kA) | Weld time (ms) | Cooling and current passing cycles (No.) | Expulsion occurrence | Remarks |
|---|---|---|---|---|---|---|---|---|---|---|---|---|---|---|---|---|---|
| 1 | 3.5 | 4.5 | 6.0 | 6.0 | 200 | No | 4.4 | 2.97 | 2.84 | 3.62 | 3.38 | 20 | 8.5 | 40 | 4 | No | Example |
| 2 | 3.5 | 4.0 | 5.5 | 5.5 | 200 | No | 3.7 | 2.97 | 2.84 | 3.62 | 3.38 | 20 | 10.0 | 40 | 4 | Yes | Example |
| 3 | 3.5 | 6.0 | 7.5 | 7.5 | 80 | No | 3.7 | 2.97 | 2.84 | 3.62 | 3.38 | 20 | 9.0 | 40 | 3 | Yes | Example |
| 4 | 3.5 | 4.5 | 6.0 | 6.0 | 200 | No | 4.4 | 2.97 | 2.84 | 3.62 | 3.38 | 20 | 10.0 | 40 | 2 | Yes | Example |
| 5 | 3.5 | 4.5 | 6.0 | 6.0 | 200 | No | 4.4 | 2.97 | 2.84 | 3.62 | 3.38 | 20 | 10.0 | 40 | 4 | Yes | Example |
| 6 | 3.5 | 4.5 | 6.0 | 6.0 | 200 | No | 4.4 | 2.97 | 2.84 | 3.62 | 3.38 | 20 | 10.0 | 40 | 4 | Yes | Example |
| 7 | 3.5 | 6.0 | 7.5 | 7.5 | 200 | No | 5.4 | 2.97 | 2.84 | 3.62 | 3.38 | 20 | 9.5 | 40 | 1 | No | Example |
| 8 | 3.5 | 4.5 | 6.0 | 6.0 | 200 | No | 4.4 | 2.97 | 2.84 | 3.62 | 3.38 | 20 | 10.0 | 20 | 5 | Yes | Example |
| 9 | 3.5 | 3.5 | 5.0 | 5.0 | 200 | No | 3.1 | 2.97 | 2.84 | 3.62 | 3.38 | 20 | 11.0 | 40 | 4 | Yes | Example |
| 10 | 3.5 | - | - | 6.5 | 80 | Yes | 3.3 | 2.97 | 2.84 | 3.62 | 3.38 | 20 | 10.0 | 40 | 3 | Yes | Example |
| 11 | 3.5 | 7.0 | 8.5 | 8.5 | 200 | No | 5.6 | 2.97 | 2.84 | 3.62 | 3.38 | 20 | 9.0 | 40 | 4 | No | Example |
| 12 | 3.5 | 5.5 | 7.0 | 7.0 | 200 | No | 5.0 | 2.97 | 2.84 | 3.62 | 3.38 | 20 | 10.0 | 40 | 4 | Yes | Example |
| 13 | 3.5 | 5.5 | 7.0 | 7.0 | 200 | No | 5.0 | 2.97 | 2.84 | 3.62 | 3.38 | 20 | 10.0 | 40 | 4 | Yes | Example |
| 14 | 3.5 | 1.5 | 6.0 | 6.0 | 600 | No | 4.9 | 2.97 | 2.84 | 3.62 | 3.38 | 140 | 10.0 | 180 | 2 | Yes | Example |
| 15 | 3.5 | 4.5 | 6.0 | 6.0 | 200 | No | 4.4 | 2.97 | 2.84 | 3.62 | 3.38 | 10 | 10.0 | 15 | 5 | Yes | Example |
| 16 | 3.5 | 4.5 | 6.0 | 6.0 | 200 | No | 4.4 | 2.97 | 2.84 | 3.62 | 3.38 | 10 | 10.0 | 20 | 5 | Yes | Example |
| 17 | 3.5 | 5.0 | 6.5 | 6.5 | 200 | No | 4.7 | 2.97 | 2.84 | 3.62 | 3.38 | - | - | - | - | - | Comparative Example |
| 18 | 3.5 | 3.0 | 4.5 | 4.5 | 200 | No | 2.3 | 2.97 | 2.84 | 3.62 | 3.38 | 20 | 7.0 | 40 | 4 | No | Comparative Example |
| 19 | 3.5 | 3.0 | 4.5 | 4.5 | 200 | No | 2.3 | 2.97 | 2.84 | 3.62 | 3.38 | 20 | 140 | 40 | 2 | Yes | Comparative Example |

(continued)

| Sample No. | Electrode force | First current process | | | | | | | | | | | Second current process | | | | | Remarks |
| | | Current value | | | Weld time | Expulsion occurrence | Intermediate stage nugget | | | | | Cooling | Current passing | | Cooling and current passing cycles | Expulsion occurrence | |
| | | Upslope start current Is | Upslope end current If | I1 | | | WO | Expression (7) lower limit (1st sheet) | Expression (8) lower limit (nth sheet) | Expression (9) preferred lower limit (1st sheet) | Expression (10) preferred lower limit (nth sheet) | Cooling time | Current value | Weld time | | | |
| | kN | kA | kA | kA | ms | | mm | | | | | ms | kA | ms | No. | | |
| 20 | 3.5 | 3.0 | 4.5 | 4.5 | 200 | No | 2.3 | 2.97 | 2.84 | 3.62 | 3.38 | 20 | 15.0 | 40 | 2 | Yes | Comparative Example |
| 21 | 3.5 | - | - | 6.5 | 80 | No | 3.3 | 2.97 | 2.84 | 3.62 | 3.38 | 20 | 9.0 | 40 | 3 | Yes | Comparative Example |
| 22 | 3.5 | - | - | 7.0 | 80 | Yes | 32 | 2.97 | 2.84 | 3.62 | 3.38 | 20 | 9.0 | 40 | 3 | Yes | Comparative Example |
| 23 | 3.5 | 3.0 | 4.5 | 4.5 | 200 | No | 2.3 | 2.97 | 2.84 | 3.62 | 3.38 | 20 | 13.0 | 40 | 4 | Yes | Comparative Example |
| 24 | 3.5 | 3.0 | 4.5 | 4.5 | 200 | No | 2.3 | 2.97 | 2.84 | 3.62 | 3.38 | 20 | 13.0 | 40 | 4 | Yes | Comparative Example |
| 25 | 3.5 | 6.0 | 7.5 | 7.5 | 200 | No | 5.4 | 2.97 | 2.84 | 3.62 | 3.38 | - | - | - | - | - | Comparative Example |
| 26 | 3.5 | 5.5 | 7.0 | 7.0 | 200 | No | 5.0 | 2.97 | 2.84 | 3.62 | 3.38 | 20 | 6.5 | 40 | 4 | No | Comparative Example |
| 27 | 3.5 | 1.5 | 6.0 | 6.0 | 600 | No | 4.9 | 2.97 | 2.84 | 3.62 | 3.38 | 160 | 10.0 | 180 | 2 | Yes | Comparative Example |
| 28 | 3.5 | 1.5 | 6.0 | 6.0 | 600 | No | 4.9 | 2.97 | 2.84 | 3.62 | 3.38 | 140 | 10.0 | 200 | 2 | Yes | Comparative Example |
| 29 | 3.5 | 4.5 | 6.0 | 6.0 | 200 | No | 4.4 | 2.97 | 2.84 | 3.62 | 3.38 | 10 | 10.0 | 10 | 5 | No | Comparative Example |
| 30 | 3.5 | 4.5 | 6.0 | 6.0 | 200 | No | 4.4 | 2.97 | 2.84 | 3.62 | 3.38 | 5 | 10.0 | 20 | 5 | Yes | Comparative Example |
| 31 | 4.0 | 6.5 | 8.0 | 8.0 | 200 | No | 5.4 | 3.24 | 2.92 | 4.12 | 3.52 | 20 | 8.5 | 40 | 3 | No | Example |
| 32 | 5.0 | 3.5 | 5.0 | 5.0 | 200 | No | 3.3 | 3.24 | 2.92 | 4.12 | 3.52 | 20 | 9.5 | 40 | 3 | Yes | Example |
| 33 | 4.0 | 3.0 | 4.5 | 4.5 | 200 | No | 2.3 | 3.24 | 2.92 | 4.12 | 3.52 | 20 | 13.0 | 40 | 3 | Yes | Comparative Example |

(continued)

| Sample No. | Electrode force | First current process | | | | | | | | | | | | Second current process | | | | Remarks |
| | | Current value | | | Weld time | Expulsion occurrence | Intermediate stage nugget | | | | | Cooling time | Current passing | | Cooling and current passing cycles | Expulsion occurrence | |
| | | Upslope start current Is | Upslope end current If | I1 | | | WO | Expression (7) lower limit (1st sheet) | Expression (8) lower limit (nth sheet) | Expression (9) preferred lower limit (1st sheet) | Expression (10) preferred lower limit (nth sheet) | Cooling time | Current value | Weld time | | | |
| | kN | kA | kA | kA | ms | | mm | | | | | ms | kA | ms | No. | | |
| 34 | 3.5 | 4.0 | 5.5 | 5.5 | 200 | No | 3.8 | 2.97 | 2.84 | 3.62 | 3.38 | 20 | 10.0 | 40 | 4 | Yes | Example |
| 35 | 3.5 | 3.5 | 5.0 | 5.0 | 200 | No | 3.2 | 2.97 | 2.84 | 3.62 | 3.38 | 20 | 11.0 | 40 | 4 | Yes | Example |
| 36 | 3.5 | 3.0 | 4.5 | 4.5 | 200 | No | 2.4 | 2.97 | 2.84 | 3.62 | 3.38 | 20 | 7.0 | 40 | 4 | No | Comparative Example |
| 37 | 3.5 | 3.0 | 4.5 | 4.5 | 200 | No | 2.4 | 2.97 | 2.84 | 3.62 | 3.38 | 20 | 15.0 | 40 | 2 | Yes | Comparative Example |
| 38 | 3.5 | 4.0 | 5.5 | 5.5 | 200 | No | 3.7 | 2.97 | 2.84 | 3.62 | 3.38 | 20 | 10.0 | 40 | 4 | Yes | Example |
| 39 | 3.5 | 3.5 | 5.0 | 5.0 | 200 | No | 3.0 | 2.97 | 2.84 | 3.62 | 3.38 | 20 | 11.0 | 40 | 4 | Yes | Example |
| 40 | 3.5 | 3.0 | 4.5 | 4.5 | 200 | No | 2.2 | 2.97 | 2.84 | 3.62 | 3.38 | 20 | 15.0 | 40 | 2 | Yes | Comparative Example |
| 41 | 3.5 | 4.0 | 5.5 | 5.5 | 200 | No | 3.7 | 2.97 | 2.84 | 3.62 | 3.38 | 20 | 10.0 | 40 | 4 | Yes | Example |
| 42 | 3.5 | 3.5 | 5.0 | 5.0 | 200 | No | 3.1 | 2.97 | 2.84 | 3.62 | 3.38 | 20 | 11.0 | 40 | 4 | Yes | Example |
| 43 | 3.5 | 3.0 | 4.5 | 4.5 | 200 | No | 2.3 | 2.97 | 2.84 | 3.62 | 3.38 | 20 | 15.0 | 40 | 2 | Yes | Comparative Example |
| 44 | 3.5 | 4.0 | 5.5 | 5.5 | 200 | No | 3.7 | 2.97 | 2.84 | 3.62 | 3.38 | 20 | 10.0 | 40 | 4 | Yes | Example |
| 45 | 3.5 | 3.5 | 5.0 | 5.0 | 200 | No | 3.1 | 2.97 | 2.84 | 3.62 | 3.38 | 20 | 11.0 | 40 | 4 | Yes | Example |
| 46 | 3.5 | 3.0 | 4.5 | 4.5 | 200 | No | 2.3 | 2.97 | 2.84 | 3.62 | 3.38 | 20 | 15.0 | 40 | 2 | Yes | Comparative Example |
| 47 | 3.5 | 4.0 | 5.5 | 5.5 | 200 | No | 3.7 | 2.97 | 2.84 | 3.62 | 3.38 | 20 | 10.0 | 40 | 4 | Yes | Example |
| 48 | 3.5 | 3.5 | 5.0 | 5.0 | 200 | No | 3.1 | 2.97 | 2.84 | 3.62 | 3.38 | 20 | 11.0 | 40 | 4 | Yes | Example |
| 49 | 3.5 | 3.0 | 4.5 | 4.5 | 200 | No | 2.3 | 2.97 | 2.84 | 3.62 | 3.38 | 20 | 15.0 | 40 | 2 | Yes | Comparative Example |

EP 4 484 044 B1

[Table 3]

[Table 3]

Table 3

| Sample No. | Shoulder angle | | | | | | Nugget diameter | | | | Welded portion cracking | | Evaluation | Remarks |
| | a | b | Expression (1) upper limit of a | Expression (2) upper limit of b | Expression (3) preferred upper limit of a | Expression (4) preferred upper limit of b | W | $x_1$ | $x_2$ | $x_3$ | Shoulder cracking | | | |
| | $°$ | $°$ | | | | | mm | $\times\sqrt{t_1}$ | $\times\sqrt{t_2}$ | $\times\sqrt{t_3}$ | 1st sheet surface | nth sheet surface | | |
|---|---|---|---|---|---|---|---|---|---|---|---|---|---|---|
| 1 | 11 | 8 | 35.8 | 28.8 | 20.3 | 16.5 | 6.0 | 4.2 | 5.1 | - | A | A | Pass (excellent) | Example |
| 2 | 16 | 14 | 35.3 | 28.5 | 20.1 | 16.3 | 5.6 | 4.1 | 4.6 | - | A | A | Pass (excellent) | Example |
| 3 | 13 | 10 | 35.6 | 28.6 | 20.2 | 16.4 | 5.8 | 4.0 | 4.8 | - | A | A | Pass (excellent) | Example |
| 4 | 18 | 16 | 35.6 | 28.6 | 20.2 | 16.4 | 5.8 | 4.3 | 4.9 | - | A | A | Pass (excellent) | Example |
| 5 | 13 | 11 | 35.2 | 28.4 | 20.0 | 16.3 | 5.5 | 4.5 | 4.6 | - | A | A | Pass (excellent) | Example |
| 6 | 14 | 12 | 35.6 | 28.6 | 20.2 | 16.4 | 5.8 | 4.5 | 4.7 | - | A | A | Pass (excellent) | Example |
| 7 | 9 | 8 | 35.7 | 28.7 | 20.3 | 16.5 | 5.9 | 4.0 | 4.9 | - | A | A | Pass (excellent) | Example |
| 8 | 16 | 13 | 35.0 | 28.2 | 19.9 | 16.2 | 5.3 | 4.0 | 4.4 | - | A | A | Pass (excellent) | Example |
| 9 | 20 | 17 | 35.6 | 28.6 | 20.2 | 16.4 | 5.8 | 5.1 | 4.9 | - | A | B | Pass (good) | Example |
| 10 | 18 | 17 | 35.5 | 28.5 | 20.2 | 16.4 | 5.7 | 4.0 | 4.7 | - | A | B | Pass (good) | Example |
| 11 | 19 | 17 | 36.4 | 29.2 | 20.7 | 16.7 | 6.6 | 4.3 | 5.5 | - | A | B | Pass (good) | Example |
| 12 | 26 | 24 | 35.7 | 28.7 | 20.3 | 16.5 | 5.9 | 4.3 | 4.9 | - | B | B | Pass (good) | Example |

(continued)

| Sample No. | a (°) | b (°) | Expression (1) upper limit of a | Expression (2) upper limit of b | Shoulder angle Expression (3) preferred upper limit of a | Expression (4) preferred upper limit of b | Nugget diameter W (mm) | $x_1$ ($\times\sqrt{t_1}$) | $x_2$ ($\times\sqrt{t_2}$) | $x_3$ ($\times\sqrt{t_3}$) | Welded portion cracking Shoulder cracking 1st sheet surface | nth sheet surface | Evaluation | Remarks |
|---|---|---|---|---|---|---|---|---|---|---|---|---|---|---|
| 13 | 27 | 25 | 35.9 | 28.8 | 20.4 | 16.5 | 6.1 | 4.4 | 5.0 | - | B | B | Pass (good) | Example |
| 14 | 28 | 27 | 35.6 | 28.6 | 20.2 | 16.4 | 5.8 | 4.1 | 4.8 | - | B | B | Pass (good) | Example |
| 15 | 20 | 17 | 35.2 | 28.4 | 20.0 | 16.3 | 5.5 | 4.1 | 4.6 | - | B | B | Pass (good) | Example |
| 16 | 22 | 19 | 35.7 | 28.7 | 20.3 | 16.5 | 5.9 | 4.6 | 4.9 | - | B | B | Pass (good) | Example |
| 17 | 5 | 3 | 34.3 | 27.8 | 19.5 | 16.0 | 4.7 | <u>0</u> | <u>3.9</u> | - | A | A | Fail | Comparative Example |
| 18 | 5 | 5 | 34.3 | 27.8 | 19.5 | 16.0 | 4.7 | <u>0</u> | <u>3.9</u> | - | A | A | Fail | Comparative Example |
| 19 | 25 | 24 | 34.8 | 28.1 | 19.8 | 16.1 | 5.1 | <u>2.7</u> | 4.2 | - | B | B | Fail | Comparative Example |
| 20 | 30 | <u>29</u> | 35.1 | 28.3 | 20.0 | 16.3 | 5.4 | <u>3.4</u> | 4.4 | - | B | C | Fail | Comparative Example |
| 21 | 16 | 14 | 35.2 | 28.4 | 20.0 | 16.3 | 5.5 | <u>3.9</u> | 4.6 | - | A | A | Fail | Comparative Example |
| 22 | 25 | 24 | 35.1 | 28.3 | 20.0 | 16.3 | 5.4 | <u>3.9</u> | 4.5 | - | B | B | Fail | Comparative Example |
| 23 | 31 | <u>30</u> | 36.2 | 29.0 | 20.6 | 16.6 | 6.4 | 6.3 | 6.5 | - | B | C | Fail | Comparative Example |
| 24 | 32 | <u>31</u> | 36.3 | 29.1 | 20.6 | 16.7 | 6.5 | 6.1 | 6.4 | - | B | C | Fail | Comparative Example |

28

(continued)

| Sample No. | Shoulder angle | | | | | | Nugget diameter | | | | Welded portion cracking | | Evaluation | Remarks |
|---|---|---|---|---|---|---|---|---|---|---|---|---|---|---|
| | a | b | Expression (1) upper limit of a | Expression (2) upper limit of b | Expression (3) preferred upper limit of a | Expression (4) preferred upper limit of b | W | $x_1$ | $x_2$ | $x_3$ | Shoulder cracking | | | |
| | ° | ° | | | | | mm | $\times\sqrt{t_1}$ | $\times\sqrt{t_2}$ | $\times\sqrt{t_3}$ | 1st sheet surface | nth sheet surface | | |
| 25 | 8 | 7 | 35.1 | 28.3 | 20.0 | 16.3 | 5.4 | <u>3.6</u> | 4.5 | - | A | A | Fail | Comparative Example |
| 26 | 7 | 6 | 34.7 | 28.0 | 19.7 | 16.1 | 5.0 | <u>0</u> | 4.1 | - | A | A | Fail | Comparative Example |
| 27 | 25 | 23 | 35.3 | 28.5 | 20.1 | 16.3 | 5.6 | <u>3.9</u> | 4.6 | - | B | B | Fail | Comparative Example |
| 28 | 30 | <u>29</u> | 35.6 | 28.6 | 20.2 | 16.4 | 5.8 | 4.3 | 4.8 | - | B | C | Fail | Comparative Example |
| 29 | 8 | 7 | 34.7 | 28.0 | 19.7 | 16.1 | 5.0 | <u>2.0</u> | 4.1 | - | A | A | Fail | Comparative Example |
| 30 | 29 | <u>29</u> | 35.1 | 28.3 | 20.0 | 16.3 | 5.4 | 4.2 | 4.5 | - | B | C | Fail | Comparative Example |
| 31 | 14 | 12 | 35.8 | 28.0 | 20.4 | 16.1 | 5.8 | 4.2 | 6.3 | 6.2 | A | A | Pass (excellent) | Example |
| 32 | 21 | 21 | 35.2 | 27.6 | 20.0 | 15.9 | 5.2 | 4.1 | 5.7 | 5.5 | B | B | Pass (good) | Example |
| 33 | 28 | <u>31</u> | 36.7 | 28.6 | 20.9 | 16.4 | 6.7 | 5.6 | 7.0 | 6.9 | B | C | Fail | Comparative Example |
| 34 | 18 | 15 | 35.6 | 28.6 | 20.2 | 16.4 | 5.8 | 4.3 | 4.8 | - | A | A | Pass (excellent) | Example |
| 35 | 20 | 19 | 35.8 | 28.8 | 20.3 | 16.5 | 6.0 | 5.3 | 5.0 | - | A | B | Pass (good) | Example |
| 36 | 6 | 6 | 34.4 | 27.9 | 19.6 | 16.0 | 4.8 | <u>0</u> | <u>3.9</u> | - | A | A | Fail | Comparative Example |

| Sample No. | Shoulder angle | | | | | | Nugget diameter | | | | Welded portion cracking | | Evaluation | Remarks |
|---|---|---|---|---|---|---|---|---|---|---|---|---|---|---|
| | a | b | Expression (1) upper limit of a | Expression (2) upper limit ofb | Expression (3) preferred upper limit of a | Expression (4) preferred upper limit of b | W | $x_1$ | $x_2$ | $x_3$ | Shoulder cracking | | | |
| | ° | ° | | | | | mm | $\times\sqrt{t_1}$ | $\times\sqrt{t_2}$ | $\times\sqrt{t_3}$ | 1st sheet surface | nth sheet surface | | |
| 37 | 32 | 31 | 35.3 | 28.5 | 20.1 | 16.3 | 5.6 | 3.6 | 4.6 | - | B | C | Fail | Comparative Example |
| 38 | 15 | 14 | 35.3 | 28.5 | 20.1 | 16.3 | 5.6 | 4.1 | 4.5 | - | A | A | Pass (excellent) | Example |
| 39 | 19 | 17 | 35.5 | 28.5 | 20.2 | 16.4 | 5.7 | 5.0 | 4.8 | - | A | B | Pass (good) | Example |
| 40 | 29 | 29 | 35.0 | 28.2 | 19.9 | 16.2 | 5.3 | 3.3 | 4.4 | - | B | C | Fail | Comparative Example |
| 41 | 17 | 14 | 35.5 | 28.5 | 20.2 | 16.4 | 5.7 | 4.2 | 4.7 | - | A | A | Pass (excellent) | Example |
| 42 | 20 | 18 | 35.6 | 28.6 | 20.2 | 16.4 | 5.8 | 5.1 | 5 | - | A | B | Pass (good) | Example |
| 43 | 31 | 29 | 35.2 | 28.4 | 20.0 | 16.3 | 5.5 | 3.5 | 4.4 | - | B | C | Fail | Comparative Example |
| 44 | 16 | 14 | 35.3 | 28.5 | 20.1 | 16.3 | 5.6 | 4.2 | 4.6 | - | A | A | Pass (excellent) | Example |
| 45 | 20 | 17 | 35.6 | 28.6 | 20.2 | 16.4 | 5.8 | 5.0 | 4.9 | - | A | B | Pass (good) | Example |
| 46 | 30 | 30 | 35.1 | 28.3 | 20.0 | 16.3 | 5.4 | 3.4 | 4.5 | - | B | C | Fail | Comparative Example |
| 47 | 15 | 13 | 35.2 | 28.4 | 20.0 | 16.3 | 5.5 | 4.1 | 4.6 | - | A | A | Pass (excellent) | Example |
| 48 | 19 | 18 | 35.5 | 28.5 | 20.2 | 16.4 | 5.7 | 5.1 | 5.1 | - | A | B | Pass (good) | Example |

30

| Sample No. | Shoulder angle | | | | | | Nugget diameter | | | | Welded portion cracking | | Evaluation | Remarks |
|---|---|---|---|---|---|---|---|---|---|---|---|---|---|---|
| | a | b | Expression (1) upper limit of a | Expression (2) upper limit ofb | Expression (3) preferred upper limit of a | Expression (4) preferred upper limit of b | W | $x_1$ | $x_2$ | $x_3$ | Shoulder cracking | | | |
| | ° | ° | | | | | mm | $\times\sqrt{t_1}$ | $\times\sqrt{t_2}$ | $\times\sqrt{t_3}$ | 1st sheet surface | nth sheet surface | | |
| 49 | 31 | 30 | 35.2 | 28.4 | 20.0 | 16.3 | 5.5 | 3.6 | 4.6 | - | B | C | Fail | Comparative Example |

EP 4 484 044 B1

According to Table 3, for all of the Examples, nugget diameters of the desired size were obtained at each boundary level between the steel sheets while suppressing the occurrence of cracking in the welded portion.

In contrast, for sample numbers 17 and 25, the second current process was not performed, that is, only one stage of current passing was performed, and therefore nugget diameters of the desired size could not be obtained at the boundary levels between the steel sheets.

For sample numbers 18 to 24, 33, 36, 37, 40, 43, 46, and 49, the first current process was performed under conditions such that the diameter W0 of the intermediate stage nugget was not within the defined range, and therefore cracking of the welded portion occurred or the desired size of nugget diameter was not obtained at the boundary levels between the steel sheets.

For sample numbers 26 to 30, the cooling time, current value, or weld time of the second current process was outside an appropriate range, and therefore cracking of the welded portion occurred or the desired size of nugget diameter was not obtained at the boundary levels between the steel sheets.

REFERENCE SIGNS LIST

1-1  steel sheet (upper steel sheet)
1-2  steel sheet (lower steel sheet)
1-3  steel sheet
2  sheet combination
3  welding electrode (upper electrode)
4  welding electrode (lower electrode)
5  nugget
6  shoulder
7  spacer
8  spacer

**Claims**

1. A welded joint comprising a sheet combination of n overlapped steel sheets and a nugget joining the steel sheets, wherein

n is an integer greater than or equal to 2,
in the sheet combination, at least one of the first steel sheet or the nth steel sheet in order from the top is a galvanized steel sheet,
in the case of [Condition 1], a shoulder angle a of the first steel sheet of the sheet combination satisfies the following Expression (1),
in the case of [Condition 2], a shoulder angle b of the nth steel sheet of the sheet combination satisfies the following Expression (2),
in the case of [Condition 3], the shoulder angles a and b satisfy Expressions (1) and (2), respectively,
in the sheet combination, nugget diameter $x_k$, in mm, at each boundary level between a kth steel sheet and a (k+1)th steel sheet is $4.0\sqrt{t_k}$ or more, k is an integer from 1 to n-1, $t_k$ is the thickness in mm of the thinner of the kth steel sheet and the (k+1)th steel sheet,

$$a \leq \{(980/S_U)^{0.3} \times (1/T^{0.3}) \times (T/t_U)^{0.2}\} \times 11 \times W^{0.3} + 15 \qquad \ldots(1)$$

$$b \leq \{(980/S_L)^{0.3} \times (1/T^{0.3}) \times (T/t_L)^{0.2}\} \times 11 \times W^{0.3} + 15 \qquad \ldots(2)$$

where

a is the shoulder angle in ° of the first steel sheet of the sheet combination,
b is the shoulder angle in ° of the nth steel sheet of the sheet combination,
T is total thickness in mm of the n steel sheets,
$t_U$ is thickness in mm of the first steel sheet,
$t_L$ is thickness in mm of the nth steel sheet,
$S_U$ is tensile strength in MPa of the first steel sheet,

$S_L$ is tensile strength in MPa of the nth steel sheet,
W is nugget diameter in mm,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

2. The welded joint according to claim 1, wherein, in the case of [Condition 1], the shoulder angle a satisfies the following Expression (3),

in the case of [Condition 2], the shoulder angle b satisfies the following Expression (4),
in the case of [Condition 3], the shoulder angles a and b satisfy Expressions (3) and (4), respectively,

$$a \le \{(980/S_U)^{0.3} \times (1/T^{0.3}) \times (T/t_U)^{0.2}\} \times 6 \times W^{0.3} + 9 \qquad ...(3)$$

$$b \le \{(980/S_L)^{0.3} \times (1/T^{0.3}) \times (T/t_L)^{0.2}\} \times 6 \times W^{0.3} + 9 \qquad ...(4).$$

3. The welded joint according to claim 1 or 2, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad ...(5)$$

$$T/t_L > 2 \qquad ...(6).$$

4. A welded member comprising the welded joint according to claim 1 or 2.

5. A welded member comprising the welded joint according to claim 3.

6. A resistance spot welding method of squeezing, by a pair of welding electrodes, a sheet combination of n overlapped steel sheets and passing a current while applying an electrode force to join the sheet combination, wherein

n is an integer greater than or equal to 2,
in the sheet combination, at least one of the first steel sheet or the nth steel sheet in order from the top is a galvanized steel sheet,
the resistance spot welding method comprising:

a first current process of forming an intermediate stage nugget; and
a second current process of enlarging the intermediate stage nugget,
wherein,
in the first current process, current is passed under conditions such that a diameter W0 of the intermediate stage nugget satisfies,
in the case of [Condition 1], the following Expression (7),
in the case of [Condition 2], the following Expression (8),
in the case of [Condition 3], Expressions (7) and (8),
the second current process comprises:

cooling where no current is passed for a cooling time of 10 ms or more to less than 160 ms; and
current passing for a weld time of 15 ms or more to less than 200 ms with a current value greater than or equal to a current value of the first current process, the cooling and the current passing each being carried out at least once,

$$(T^{0.3}/t_U^{0.2}) \times (S_U/980)^{0.1} \times 2.0 \leq W0 \qquad \ldots(7)$$

$$(T^{0.3}/t_L^{0.2}) \times (S_L/980)^{0.1} \times 2.0 \leq W0 \qquad \ldots(8)$$

where

W0 is diameter in mm of the intermediate stage nugget,
T is total thickness in mm of the n steel sheets,
$t_U$ is thickness in mm of the first steel sheet,
$t_L$ is thickness in mm of the nth steel sheet,
$S_U$ is tensile strength in MPa of the first steel sheet,
$S_L$ is tensile strength in MPa of the nth steel sheet,
and [Condition 1] to [Condition 3] are as follows:

[Condition 1]
of the first steel sheet and the nth steel sheet of the sheet combination, only the first steel sheet is a galvanized steel sheet,
[Condition 2]
of the first steel sheet and the nth steel sheet of the sheet combination, only the nth steel sheet is a galvanized steel sheet,
[Condition 3]
of the first steel sheet and the nth steel sheet of the sheet combination, both the first steel sheet and the nth steel sheet are galvanized steel sheets.

7.  The resistance spot welding method according to claim 6, wherein current is passed in the first current process under conditions such that the diameter W0 of the intermediate stage nugget satisfies,

    in the case of [Condition 1], the following Expression (9),
    in the case of [Condition 2], the following Expression (10),
    in the case of [Condition 3], Expressions (9) and (10),

$$(T^{0.45}/t_U^{0.3}) \times (S_U/980)^{0.15} \times 2.0 \leq W0 \qquad \ldots(9)$$

$$(T^{0.35}/t_L^{0.3}) \times (S_L/980)^{0.15} \times 2.0 \leq W0 \qquad \ldots(10).$$

8.  The resistance spot welding method according to claim 6, wherein current is passed in the first current process under conditions satisfying the following Expression (11),

$$If > Is \qquad \ldots(11)$$

    where

    Is is current value in kA at the start of current passing in the first current process, and
    If is current value in kA at the end of current passing in the first current process.

9.  The resistance spot welding method according to claim 7, wherein current is passed in the first current process under conditions satisfying the following Expression (11),

$$If > Is \qquad \ldots(11)$$

    where

Is is current value in kA at the start of current passing in the first current process, and

If is current value in kA at the end of current passing in the first current process.

10. The resistance spot welding method according to claim 6, wherein the total thickness T of the n steel sheets, the thickness tu of the first steel sheet, and the thickness $t_L$ of the nth steel sheet satisfy at least one of the following Expressions (5) or (6),

$$T/t_U > 2 \qquad \qquad \dots(5)$$

$$T/t_L > 2 \qquad \qquad \dots(6).$$

11. The resistance spot welding method according to claim 7, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad \qquad \dots(5)$$

$$T/t_L > 2 \qquad \qquad \dots(6).$$

12. The resistance spot welding method according to claim 8, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad \qquad \dots(5)$$

$$T/t_L > 2 \qquad \qquad \dots(6).$$

13. The resistance spot welding method according to claim 9, wherein the total thickness T of the n steel sheets, the thickness $t_U$ of the first steel sheet, and the thickness $t_L$ of the nth steel sheet satisfy at least one of the following Expressions (5) or (6),

$$T/t_U > 2 \qquad \qquad \dots(5)$$

$$T/t_L > 2 \qquad \qquad \dots(6).$$

14. The resistance spot welding method according to any one of claims 6 to 13, satisfying one or more of the following conditions (A) to (E),

   (A) a welding electrode has an inclined angle relative to the sheet combination,
   (B) the pair of welding electrodes are off-center,
   (C) before pressing the sheet combination, there is a gap between the fixed welding electrode and the sheet combination,
   (D) before pressing the sheet combination, there is at least one gap between the steel sheets of the sheet combination, and
   (E) on the surface of the sheet combination, the shortest distance from the center of the welding contact point to an end face of the sheet combination is 10 mm or less.

15. A method of producing a welded member, comprising a process of joining a sheet combination of n overlapped steel sheets by the resistance spot welding method according to any one of claims 6 to 13, wherein n is an integer greater than or equal to 2.

16. A method of producing a welded member, comprising a process of joining a sheet combination of n overlapped steel sheets by the resistance spot welding method according to claim 14, wherein n is an integer greater than or equal to 2.

**Patentansprüche**

1. Schweißverbindung, umfassend eine Blechkombination aus n überlappten Stahlblechen und eine Linse (Nugget), die die Stahlbleche verbindet, wobei

n eine ganze Zahl größer als oder gleich 2 ist,
in der Blechkombination mindestens eines von dem ersten Stahlblech oder dem n-ten Stahlblech in der Reihenfolge von oben ein verzinktes Stahlblech ist,
im Falle von [Bedingung 1] ein Schulterwinkel a des ersten Stahlblechs der Blechkombination die folgende Gleichung (1) erfüllt,
im Falle von [Bedingung 2] ein Schulterwinkel b des n-ten Stahlblechs der Blechkombination die folgende Gleichung (2) erfüllt,
im Falle von [Bedingung 3] die Schulterwinkel a und b jeweils die Gleichungen (1) und (2) erfüllen,
in der Blechkombination ein Linsendurchmesser $x_k$ in mm an jeder Grenzflächenebene zwischen einem k-ten Stahlblech und einem (k+1)-ten Stahlblech $4.0\sqrt{t_k}$ oder mehr beträgt, k eine ganze Zahl von 1 bis n-1 ist, $t_k$ die Dicke in mm des dünneren von dem k-ten Stahlblech und dem (k+1)-ten Stahlblech ist,

$$a \leq \{(980/S_U)^{0.3} \times (1/T^{0.3}) \times (T/t_U)^{0.2}\} \times 11 \times W^{0.3} + 15 \quad \text{...}(1)$$

$$b \leq \{(980/S_L)^{0.3} \times (1/T^{0.3}) \times (T/t_L)^{0.2}\} \times 11 \times W^{0.3} + 15 \quad \text{...}(2)$$

wobei

a der Schulterwinkel in ° des ersten Stahlblechs der Blechkombination ist,
b der Schulterwinkel in ° des n-ten Stahlblechs der Blechkombination ist,
T die Gesamtdicke in mm der n Stahlbleche ist,
$t_U$ die Dicke in mm des ersten Stahlblechs ist,
$t_L$ die Dicke in mm des n-ten Stahlblechs ist,
$S_U$ die Zugfestigkeit in MPa des ersten Stahlblechs ist,
$S_L$ die Zugfestigkeit in MPa des n-ten Stahlblechs ist,
W der Linsendurchmesser in mm ist,
und [Bedingung 1] bis [Bedingung 3] wie folgt lauten:

[Bedingung 1]
von dem ersten Stahlblech und dem n-ten Stahlblech der Blechkombination ist nur das erste Stahlblech ein verzinktes Stahlblech,
[Bedingung 2]
von dem ersten Stahlblech und dem n-ten Stahlblech der Blechkombination ist nur das n-ten Stahlblech ein verzinktes Stahlblech,
[Bedingung 3]
von dem ersten Stahlblech und dem n-ten Stahlblech der Blechkombination sind sowohl das erste Stahlblech als auch das n-te Stahlblech verzinkte Stahlbleche.

2. Schweißverbindung nach Anspruch 1, wobei im Falle von [Bedingung 1] der Schulterwinkel a die folgende Gleichung (3) erfüllt,

im Falle von [Bedingung 2] der Schulterwinkel b die folgende Gleichung (4) erfüllt,
im Falle von [Bedingung 3] die Schulterwinkel a und b jeweils die Gleichungen (3) und (4) erfüllen,

$$a \leq \{(980/S_U)^{0,3} \times (1/T^{0,3}) \times \quad ...(3)$$
$$(T/t_U)^{0,2}\} \times 6 \times W^{0,3} + 9$$

$$b \leq \{(980/S_L)^{0,3} \times (1/T^{0,3}) \times \quad ...(4).$$
$$(T/t_L)^{0,2}\} \times 6 \times W^{0,3} + 9$$

**3.** Schweißverbindung nach Anspruch 1 oder 2, wobei die Gesamtdicke T der n Stahlbleche, die Dicke $t_U$ des ersten Stahlblechs, und die Dicke $t_L$ des n-ten Stahlblechs mindestens eine der folgenden Gleichungen (5) oder (6) erfüllen,

$$T/t_U > 2 \quad ...(5)$$

$$T/t_L > 2 \quad ...(6).$$

**4.** Geschweißtes Bauteil, umfassend die Schweißverbindung nach Anspruch 1 oder 2.

**5.** Geschweißtes Bauteil, umfassend die Schweißverbindung nach Anspruch 3.

**6.** Widerstandspunktschweißverfahren zum Zusammendrücken, durch ein Paar Schweißelektroden, einer Blechkombination aus n überlappten Stahlblechen und zum Leiten eines Stroms unter Aufbringung einer Elektrodenkraft, um die Blechkombination zu verbinden, wobei

n eine ganze Zahl größer als oder gleich 2 ist,
in der Blechkombination mindestens eines von dem ersten Stahlblech oder dem n-ten Stahlblech in der Reihenfolge von oben ein verzinktes Stahlblech ist,
wobei das Widerstandspunktschweißverfahren umfasst:

einen ersten Stromprozess zum Bilden einer Zwischenstufenlinse; und
einen zweiten Stromprozess zum Vergrößern der Zwischenstufenlinse,
wobei,
in dem ersten Stromprozess Strom unter solchen Bedingungen geleitet wird, dass ein Durchmesser W0 der Zwischenstufenlinse Folgendes erfüllt,
im Falle von [Bedingung 1] die folgende Gleichung (7),
im Falle von [Bedingung 2] die folgende Gleichung (8),
im Falle von [Bedingung 3] die Gleichungen (7) und (8),
wobei der zweite Stromprozess umfasst:

Kühlen, wobei für eine Kühlzeit von 10 ms oder mehr bis weniger als 160 ms kein Strom geleitet wird; und
Stromleiten für eine Schweißzeit von 15 ms oder mehr bis weniger als 200 ms mit einem Stromwert, der größer als oder gleich einem Stromwert des ersten Stromprozesses ist, wobei das Kühlen und das Stromleiten jeweils mindestens einmal ausgeführt werden,

$$(T^{0.3}/t_U^{0.2}) \times (S_U/980)^{0.1} \times 2.0 \leq \quad ...(7)$$
$$W0$$

$$(T^{0.3}/t_L^{0.2}) \times (S_L/980)^{0.1} \times 2.0 \leq \quad ...(8)$$
$$W0$$

wobei

W0 der Durchmesser in mm der Zwischenstufenlinse ist,
T die Gesamtdicke in mm der n Stahlbleche ist,
$t_U$ die Dicke in mm des ersten Stahlblechs ist,
$t_L$ die Dicke in mm des n-ten Stahlblechs ist,

$S_U$ die Zugfestigkeit in MPa des ersten Stahlblechs ist,
$S_L$ die Zugfestigkeit in MPa des n-ten Stahlblechs ist,
und [Bedingung 1] bis [Bedingung 3] wie folgt lauten:

[Bedingung 1]
von dem ersten Stahlblech und dem n-ten Stahlblech der Blechkombination ist nur das erste Stahlblech ein verzinktes Stahlblech,
[Bedingung 2]
von dem ersten Stahlblech und dem n-ten Stahlblech der Blechkombination ist nur das n-ten Stahlblech ein verzinktes Stahlblech,
[Bedingung 3]
von dem ersten Stahlblech und dem n-ten Stahlblech der Blechkombination sind sowohl das erste Stahlblech als auch das n-te Stahlblech verzinkte Stahlbleche.

7. Widerstandspunktschweißverfahren nach Anspruch 6, wobei Strom in dem ersten Stromprozess unter solchen Bedingungen geleitet wird, dass der Durchmesser W0 der Zwischenstufenlinse Folgendes erfüllt,

im Falle von [Bedingung 1] die folgende Gleichung (9),
im Falle von [Bedingung 2] die folgende Gleichung (10),
im Falle von [Bedingung 3] die Gleichungen (9) und (10),

$$(T^{0.45}/t_U^{0.3}) \times (S_U/980)^{0.15} \times 2.0 \quad \ldots(9)$$

$$\leq W0$$

$$(T^{0.35}/t_L^{0.3}) \times (S_L/980)^{0.15} \times 2.0 \quad \ldots(10).$$

$$\leq W0$$

8. Widerstandspunktschweißverfahren nach Anspruch 6, wobei Strom in dem ersten Stromprozess unter Bedingungen geleitet wird, die die folgende Gleichung (11) erfüllen,

$$If > Is \quad \ldots(11)$$

wobei

Is der Stromwert in kA zu Beginn des Stromleitens in dem ersten Stromprozess ist, und
If der Stromwert in kA am Ende des Stromleitens in dem ersten Stromprozess ist.

9. Widerstandspunktschweißverfahren nach Anspruch 7, wobei Strom in dem ersten Stromprozess unter Bedingungen geleitet wird, die die folgende Gleichung (11) erfüllen,

$$If > Is \quad \ldots(11)$$

wobei

Is der Stromwert in kA zu Beginn des Stromleitens in dem ersten Stromprozess ist, und
If der Stromwert in kA am Ende des Stromleitens in dem ersten Stromprozess ist.

10. Widerstandspunktschweißverfahren nach Anspruch 6, wobei die Gesamtdicke T der n Stahlbleche, die Dicke $t_U$ des ersten Stahlblechs, und die Dicke $t_L$ des n-ten Stahlblechs mindestens eine der folgenden Gleichungen (5) oder (6) erfüllen,

$$T/t_U > 2 \quad \ldots(5)$$

$$T/t_L > 2 \quad \ldots(6).$$

**11.** Widerstandspunktschweißverfahren nach Anspruch 7, wobei die Gesamtdicke T der n Stahlbleche, die Dicke $t_U$ des ersten Stahlblechs und die Dicke $t_L$ des n-ten Stahlblechs mindestens eine der folgenden Gleichungen (5) oder (6) erfüllen,

$$T/t_U > 2 \quad \text{...(5)}$$

$$T/t_L > 2 \quad \text{...(6)}.$$

**12.** Widerstandspunktschweißverfahren nach Anspruch 8, wobei die Gesamtdicke T der n Stahlbleche, die Dicke $t_U$ des ersten Stahlblechs und die Dicke $t_L$ des n-ten Stahlblechs mindestens eine der folgenden Gleichungen (5) oder (6) erfüllen,

$$T/t_U > 2 \quad \text{...(5)}$$

$$T/t_L > 2 \quad \text{...(6)}.$$

**13.** Widerstandspunktschweißverfahren nach Anspruch 9, wobei die Gesamtdicke T der n Stahlbleche, die Dicke $t_U$ des ersten Stahlblechs und die Dicke $t_L$ des n-ten Stahlblechs mindestens eine der folgenden Gleichungen (5) oder (6) erfüllen,

$$T/t_U > 2 \quad \text{...(5)}$$

$$T/t_L > 2 \quad \text{...(6)}.$$

**14.** Widerstandspunktschweißverfahren nach einem der Ansprüche 6 bis 13, das eine oder mehrere der folgenden Bedingungen (A) bis (E) Folgendes erfüllt,

(A) eine Schweißelektrode weist einen Neigungswinkel relativ zu der Blechkombination auf,
(B) das Paar Schweißelektroden ist außermittig,
(C) vor dem Pressen der Blechkombination besteht ein Spalt zwischen der festen Schweißelektrode und der Blechkombination,
(D) vor dem Pressen der Blechkombination besteht mindestens ein Spalt zwischen den Stahlblechen der Blechkombination, und
(E) auf der Oberfläche der Blechkombination beträgt der kürzeste Abstand von der Mitte des Schweißkontaktpunktes zu einer Endfläche der Blechkombination 10 mm oder weniger.

**15.** Verfahren zur Herstellung eines geschweißten Bauteils, umfassend einen Prozess zum Verbinden einer Blechkombination aus n überlappten Stahlblechen durch das Widerstandspunktschweißverfahren nach einem der Ansprüche 6 bis 13, wobei n eine ganze Zahl größer als oder gleich 2 ist.

**16.** Verfahren zur Herstellung eines geschweißten Bauteils, umfassend einen Prozess zum Verbinden einer Blechkombination aus n überlappten Stahlblechen durch das Widerstandspunktschweißverfahren nach Anspruch 14, wobei n eine ganze Zahl größer als oder gleich 2 ist.

**Revendications**

**1.** Joint soudé comprenant une combinaison de tôles de n tôles d'acier en chevauchement et un noyau assemblant les tôles d'acier, dans lequel

n est un entier supérieur ou égal à 2,
dans la combinaison de tôles, au moins l'une de la première tôle d'acier ou de la n-ième tôle d'acier dans l'ordre en partant du haut est une tôle d'acier galvanisée,
dans le cas de [Condition 1], un angle d'épaulement a de la première tôle d'acier de la combinaison de tôles satisfait à l'expression (1) suivante,

dans le cas de [Condition 2], un angle d'épaulement b de la n-ième tôle d'acier de la combinaison de tôles satisfait à l'expression (2) suivante,

dans le cas de [Condition 3], les angles d'épaulement a et b satisfont respectivement aux expressions (1) et (2),

dans la combinaison de tôles, le diamètre de noyau $x_k$, en mm, à chaque niveau de limite entre une k-ième tôle d'acier et une (k+1)-ième tôle d'acier est de $4,0\sqrt{t_k}$ ou plus, k est un entier de 1 à n-1, $t_k$ est l'épaisseur en mm de la plus mince parmi la k-ième tôle d'acier et la (k+1)-ième tôle d'acier,

$$a \le \{(980/S_U)^{0,3} \times (1/T^{0,3}) \times (T/t_U)^{0,2}\} \times 11 \times W^{0,3} + 15 \qquad ...(1)$$

$$b \le \{(980/S_L)^{0,3} \times (1/T^{0,3}) \times (T/t_L)^{0,2}\} \times 11 \times W^{0,3} + 15 \qquad ...(2)$$

où

a est l'angle d'épaulement en ° de la première tôle d'acier de la combinaison de tôles,
b est l'angle d'épaulement en ° de la n-ième tôle d'acier de la combinaison de tôles,
T est l'épaisseur totale en mm des n tôles d'acier,
$t_U$ est l'épaisseur en mm de la première tôle d'acier,
$t_L$ est l'épaisseur en mm de la n-ième tôle d'acier,
$S_U$ est la résistance à la traction en MPa de la première tôle d'acier,
$S_L$ est la résistance à la traction en MPa de la n-ième tôle d'acier,
W est le diamètre de noyau en mm,
et [Condition 1] à [Condition 3] sont les suivantes :

[Condition 1]
parmi la première tôle d'acier et la n-ième tôle d'acier de la combinaison de tôles, seulement la première tôle d'acier est une tôle d'acier galvanisée,
[Condition 2]
parmi la première tôle d'acier et la n-ième tôle d'acier de la combinaison de tôles, seulement la n-ième tôle d'acier est une tôle d'acier galvanisée,
[Condition 3]
parmi la première tôle d'acier et la n-ième tôle d'acier de la combinaison de tôles, à la fois la première tôle d'acier et la n-ième tôle d'acier sont des tôles d'acier galvanisées.

2.  Joint soudé selon la revendication 1, dans lequel, dans le cas de la [Condition 1], l'angle d'épaulement a satisfait à l'expression (3) suivante,

dans le cas de [Condition 2], l'angle d'épaulement b satisfait à l'expression (4) suivante,
dans le cas de [Condition 3], les angles d'épaulement a et b satisfont respectivement aux expressions (3) et (4),

$$a \le \{(980/S_U)^{0,3} \times (1/T^{0,3}) \times (T/t_U)^{0,2}\} \times 6 \times W^{0,3} + 9 \qquad ...(3)$$

$$b \le \{(980/S_L)^{0,3} \times (1/T^{0,3}) \times (T/t_L)^{0,2}\} \times 6 \times W^{0,3} + 9 \qquad ...(4).$$

3.  Joint soudé selon la revendication 1 ou 2, dans lequel l'épaisseur totale T des n tôles d'acier, l'épaisseur $t_U$ de la première tôle d'acier et l'épaisseur $t_L$ de la n-ième tôle d'acier satisfont au moins l'une des expressions (5) ou (6) suivantes,

$$T/t_U > 2 \qquad ...(5)$$

$$T/t_L > 2 \qquad ...(6).$$

4.  Élément soudé comprenant le joint soudé selon la revendication 1 ou 2.

5.  Élément soudé comprenant le joint soudé selon la revendication 3.

**6.** Procédé de soudage par points par résistance consistant à comprimer, à l'aide d'une paire d'électrodes de soudage, une combinaison de tôles de n tôles d'acier en chevauchement et à faire passer un courant tout en appliquant une force d'électrode pour assembler la combinaison de tôles, dans lequel n est un entier supérieur ou égal à 2,

dans la combinaison de tôles, au moins l'une de la première tôle d'acier ou de la n-ième tôle d'acier dans l'ordre en partant du haut est une tôle d'acier galvanisée,
le procédé de soudage par points par résistance comprenant :

un premier processus de courant de formation d'un noyau de stade intermédiaire ; et
un second processus de courant d'agrandissement do noyau de stade intermédiaire,
dans lequel,
dans le premier processus de courant, le courant est passé dans des conditions telles qu'un diamètre W0 du noyau de stade intermédiaire satisfait,
dans le cas de [Condition 1], l'expression (7) suivante,
dans le cas de [Condition 2], l'expression (8) suivante,
dans le cas de [Condition 3], les expressions (7) et (8),
le second processus de courant comprend :

un refroidissement où aucun courant ne passe pendant une durée de refroidissement de 10 ms ou plus à moins de 160 ms ; et
un courant passant pendant une durée de soudage de 15 ms ou plus à moins de 200 ms avec une valeur de courant supérieure ou égale à une valeur de courant du premier processus de courant, le refroidissement et le passage de courant étant chacun effectués au moins une fois,

$$(T^{0,3}/t_U^{0,2}) \times (S_U/980)^{0,1} \times 2,0 \leq W0 \qquad \ldots (7)$$

$$(T^{0,3}/t_L^{0,2}) \times (S_L/980)^{0,1} \times 2,0 \leq W0 \qquad \ldots (8)$$

où

W0 est le diamètre en mm du noyau de stade intermédiaire,
T est l'épaisseur totale en mm des n tôles d'acier,
$t_U$ est l'épaisseur en mm de la première tôle d'acier,
$t_L$ est l'épaisseur en mm de la n-ième tôle d'acier,
$S_U$ est la résistance à la traction en MPa de la première tôle d'acier,
$S_L$ est la résistance à la traction en MPa de la n-ième tôle d'acier,
et [Condition 1] à [Condition 3] sont les suivantes :

[Condition 1]
parmi la première tôle d'acier et la n-ième tôle d'acier de la combinaison de tôles, seulement la première tôle d'acier est une tôle d'acier galvanisée,
[Condition 2]
parmi la première tôle d'acier et la n-ième tôle d'acier de la combinaison de tôles, seulement la n-ième tôle d'acier est une tôle d'acier galvanisée,
[Condition 3]
parmi la première tôle d'acier et la n-ième tôle d'acier de la combinaison de tôles, à la fois la première tôle d'acier et la n-ième tôle d'acier sont des tôles d'acier galvanisées.

**7.** Procédé de soudage par points par résistance selon la revendication 6, dans lequel le courant est passé dans le premier processus de courant dans des conditions telles que le diamètre W0 du noyau de stade intermédiaire satisfait,

dans le cas de [Condition 1], l'expression (9) suivante,
dans le cas de [Condition 2], l'expression (10) suivante,
dans le cas de [Condition 3], les expressions (9) et (10),

$$(T^{0,45}/t_U^{0,3}) \times (S_U/980)^{0,15} \times 2,0 \leq W0 \qquad \ldots (9)$$

$$(T^{0,35}/t_L^{0,3}) \times (S_L/980)^{0,15} \times 2,0 \leq W0 \quad \ldots(10).$$

8. Procédé de soudage par points par résistance selon la revendication 6, dans lequel le courant est passé dans le premier processus de courant dans des conditions satisfaisant l'expression (11) suivante,

$$If > Is \quad \ldots(11)$$

où

Is est la valeur de courant en kA au début du passage de courant dans le premier processus de courant, et
If est la valeur de courant en kA à la fin du passage de courant dans le premier processus de courant.

9. Procédé de soudage par points par résistance selon la revendication 7, dans lequel le courant est passé dans le premier processus de courant dans des conditions satisfaisant l'expression (11) suivante,

$$If > Is \quad \ldots(11)$$

où

Is est la valeur de courant en kA au début du passage de courant dans le premier processus de courant, et
If est la valeur de courant en kA à la fin du passage de courant dans le premier processus de courant.

10. Procédé de soudage par points par résistance selon la revendication 6, dans lequel l'épaisseur totale T des n tôles d'acier, l'épaisseur $t_U$ de la première tôle d'acier et l'épaisseur $t_L$ de la n-ième tôle d'acier satisfont au moins l'une des expressions (5) ou (6) suivantes,

$$T/t_U > 2 \quad \ldots(5)$$

$$T/t_L > 2 \quad \ldots(6).$$

11. Procédé de soudage par points par résistance selon la revendication 7, dans lequel l'épaisseur totale T des n tôles d'acier, l'épaisseur $t_U$ de la première tôle d'acier et l'épaisseur $t_L$ de la n-ième tôle d'acier satisfont au moins l'une des expressions (5) ou (6) suivantes,

$$T/t_U > 2 \quad \ldots(5)$$

$$T/t_L > 2 \quad \ldots(6).$$

12. Procédé de soudage par points par résistance selon la revendication 8, dans lequel l'épaisseur totale T des n tôles d'acier, l'épaisseur $t_U$ de la première tôle d'acier et l'épaisseur $t_L$ de la n-ième tôle d'acier satisfont au moins l'une des expressions (5) ou (6) suivantes,

$$T/t_U > 2 \quad \ldots(5)$$

$$T/t_L > 2 \quad \ldots(6).$$

13. Procédé de soudage par points par résistance selon la revendication 9, dans lequel l'épaisseur totale T des n tôles d'acier, l'épaisseur $t_U$ de la première tôle d'acier et l'épaisseur $t_L$ de la n-ième tôle d'acier satisfont au moins l'une des expressions (5) ou (6) suivantes,

$$T/t_U > 2 \quad \ldots(5)$$

$$T/t_L > 2 \quad \ldots(6).$$

**14.** Procédé de soudage par points par résistance selon l'une quelconque des revendications 6 à 13, satisfaisant à une ou plusieurs des conditions (A) à (E) suivantes,

(A) une électrode de soudage a un angle incliné par rapport à la combinaison de tôles,
(B) la paire d'électrodes de soudage sont décentrées,
(C) avant de presser la combinaison de tôles, il y a un espace entre l'électrode de soudage fixe et la combinaison de tôles,
(D) avant de presser la combinaison de tôles, il y a au moins un espace entre les tôles d'acier de la combinaison de tôles, et
(E) sur la surface de la combinaison de tôles, la distance la plus courte entre le centre du point de contact de soudage et une face d'extrémité de la combinaison de tôles est de 10 mm ou moins.

**15.** Procédé de production d'un élément soudé, comprenant un processus d'assemblage d'une combinaison de tôles de n tôles d'acier en chevauchement par le procédé de soudage par points par résistance selon l'une quelconque des revendications 6 à 13, dans lequel n est un entier supérieur ou égal à 2.

**16.** Procédé de production d'un élément soudé, comprenant un processus d'assemblage d'une combinaison de tôles de n tôles d'acier en chevauchement par le procédé de soudage par points par résistance selon la revendication 14, dans lequel n est un entier supérieur ou égal à 2.

# FIG. 1

# FIG. 2

# FIG. 3

Top view    Welding point (indentation)

Side view

7~    ~8

1-1
1-3
1-2

**EP 4 484 044 B1**

**Patent documents cited in the description**

- JP 2003103377 A
- JP 2003236676 A
- WO 2016159169 A1
- JP 2017047476 A
- WO 2018159764 A1
- JP 2020127958 A
- WO 2019124464 A1
- EP 3278917 A